# EUROPEAN PATENT APPLICATION

(11) **EP 4 701 246 A1**
(43) Date of publication of application: **25.02.2026**
(21) Application number: 24792882.3
(22) Date of filing: 27.03.2024
(51) Int. Cl.: H04W 8/00, H04L 5/00, H04L 1/00, H04W 76/14, H04W 84/12, H04W 88/04

(54) **STATION DETECTION AND RELAY STATION IN WIRELESS LAN SYSTEM**

(30) Priority: 17.04.2023 KR 20230050325
(71) Applicant: LG Electronics Inc., Yeongdeungpo-gu Seoul 07336 (KR)
(72) Inventor: LIM, Dongguk, Seoul 06772 (KR); CHUN, Jinyoung, Seoul 06772 (KR); CHOI, Jinsoo, Seoul 06772 (KR); PARK, Eunsung, Seoul 06772 (KR)
(74) Representative: Plasseraud IP
(86) International application number: PCT/KR2024/003876
(87) International publication number: WO 2024/219695

(57) **Abstract**

For example, a technical feature of the present disclosure may be related to a method performed in a wireless local area network (WLAN) system. For example, a method of the present disclosure may comprise a step of transmitting a detection request frame by an access point (AP) station (STA) to a relay STA. The detection request frame comprises control information for a non-AP STA detection procedure performed by the relay STA, and the non-AP STA detection procedure may be performed on the basis of a physical protocol data unit (PPDU) transmitted from at least one non-AP STA to the AP STA. In addition, in the method of the present disclosure, the AP STA may receive, from the relay STA, report information of the non-AP STA detection procedure performed by the relay STA. In this case, the report information may comprise information on at least one non-AP obtained by the relay STA.

## Description

### TECHNICAL FIELD

The present specification relates to a wireless LAN system, and more specifically, to technical features for detecting a station of a wireless LAN system and a relay for performing detection.

### BACKGROUND ART

Wireless local area networks (WLANs) have been improved in various ways. For example, the Extreme High Throughput (EHT) standard can utilize newly proposed increased bandwidth, an improved PHY layer protocol data unit (PPDU) structure, improved sequences, and the Hybrid Automatic Repeat Request (HARQ) technique. The EHT standard may also be referred to as the IEEE 802.11be standard.

To support high throughput and data rates, the EHT standard can utilize wide bandwidths (e.g., 160/320 MHz), 16 streams, and/or multi-link (or multi-band) operation.

In the EHT standard, wide bandwidths (e.g., 160/240/320 MHz) can be used to achieve high throughput. Preamble puncturing and multiple RU transmissions can also be used to efficiently utilize bandwidth.

WLAN systems can be further improved through the Ultra High Reliability (UHR) standard. The UHR system can be referred to as the IEEE 802.11bn standard. It aims to support ultra-high reliability when transmitting signals to STAs. To achieve this, various technologies are being considered, including high throughput, low latency, and extended range support.

### SPECIFICATION

### TECHNICAL PROBLEM

The present specification relates to relay operations/procedures/ transmissions in wireless LAN systems. The technical features of the present propose a relay station in a next-generation wireless LAN system to ensure reliable transmission and extend coverage/range for various IoT devices, as well as outdoor environments.

To efficiently perform the relay operations/procedures/transmissions proposed in the present specification, detection/discovery of non-AP STAs present near the relay STA is required. The present specification proposes a technical feature that enables a relay STA to efficiently detect at least one non-AP STA.

### TECHNICAL SOLUTION

This specification proposes various technical features. These technical features can be applied to various types of STAs/devices.

For example, the technical features of the present specification may relate to a method performed in a Wireless Local Area Network (WLAN) system. For example, the method of the present specification may include a step of transmitting a detection request frame from an Access Point (AP) STA (station) to a relay STA. The detection request frame includes control information for a non-AP STA detection procedure performed by the relay STA, and the non-AP STA detection procedure may be performed based on a Physical Protocol Data Unit (PPDU) transmitted from at least one non-AP STA to the AP STA. In addition, the method of the present specification may receive, from the relay STA, report information of the non-AP STA detection procedure performed by the relay STA at the AP STA. In this case, the report information may include information on at least one non-AP obtained from the relay STA.

### ADVANTAGEOUS EFFECTS

The technical features described herein can produce various advantageous effects. The technical features of the present specification enable a relay STA to detect at least one STA, and report the results of such detection to an AP. Through the efficient detection method proposed by this specification, the AP can obtain accurate information related to non-AP(s) located around the relay STA, and also obtain accurate information related to link quality of non-AP(s) located around the relay STA. This allows the AP to precisely control the relay STA. This enables stable signal transmission (i.e., reliable signal transmission) regardless of the location of non-STA(s) within the BSS. Furthermore, the efficient operation of the relay STA can increase the coverage of wireless LAN signals and eliminate holes where signals cannot reach.

### BRIEF DESCRIPTION OF THE DRAWINGS

Figure 1 illustrates an example of a transmitting device and/or receiving device of the present specification.
Figure 2 is a conceptual diagram illustrating the structure of a wireless local area network (WLAN).
Figure 3 is a diagram illustrating a general link setup process.
Figure 4 illustrates an embodiment of multi-link (ML).
Figure 5 illustrates PPDUs transmitted/received by a STA of the present specification.
Figure 6 is a diagram illustrating the layout of resource units (RUs) used for a 20MHz PPDU.
Figure 7 is a diagram illustrating the layout of resource units (RUs) used for a 40MHz PPDU.
Figure 8 is a diagram illustrating the layout of resource units (RUs) used for an 80MHz PPDU.
Figure 9 illustrates operations according to UL-MU.
Figure 10 illustrates an example of channels used/supported/defined within the 2.4 GHz band.
Figure 11 illustrates an example of channels used/supported/defined within the 5 GHz band.
Figure 12 illustrates an example of channels used/supported/defined within the 6 GHz band.
Figure 13 illustrates an example of a MAC frame header.
Figure 14 illustrates a modified example of a transmitting device and/or receiving device according to the present specification.
Figure 15 illustrates the technical features of a relay STA controlled by an AP.
Figure 16 is an example of a management frame containing information regarding relay operation.
Figure 17 is a diagram illustrating an example of discovery/discovery performed in this specification.
Figure 18 is an example of the STA list field presented in this specification.
Figure 19 illustrates an example of a PPDU transmitted for detection/discovery.
Figure 20 illustrates another example of a PPDU transmitted for detection/discovery.
Figure 21 illustrates another example of a PPDU transmitted for detection/discovery.
Figure 22 is an example of the user information field.
Figure 23 is a diagram illustrating an example of discovery/discovery performed in this specification.
Figure 24 is a diagram illustrating an example of discovery/discovery performed in this specification.
Figure 25 is an example of a procedure flowchart presented in this specification.
Figure 26 is an example of a procedure flowchart of this specification. **DESCRIPTION OF EXEMPLARY**

### EMBODIMENTS

As used herein, "A or B" can mean "only A," "only B," or "both A and B." Alternatively, "A or B" can be interpreted as "A and/or B." For example, as used herein, "A, B or C" can mean "only A," "only B," "only C," or "any combination of A, B, and C."

As used herein, a slash (/) or a comma can mean "and/or." For example, "A/B" can mean "A and/or B." Accordingly, "A/B" can mean "only A," "only B," or "both A and B." For example, "A, B, C" may mean "A, B, or C."

In the present specification, "at least one of A and B" may mean "only A," "only B," or "both A and B." Furthermore, in the present specification, the expressions "at least one of A or B" or "at least one of A and/or B" may be interpreted identically to "at least one of A and B."

Furthermore, parentheses used herein may mean "for example." Specifically, when "control information (UHR-Signal field)" is indicated, the "UHR-Signal field" may be suggested as an example of "control information." In other words, the "control information" in the present specification is not limited to the "UHR-Signal field," and the "UHR-Signal field" may be proposed as an example of "control information." Furthermore, even when "control information (UHR-Signal field)" is indicated, the "UHR-Signal field" may be proposed as an example of "control information."

Furthermore, "a/an" as used herein may mean "at least one" or "one or more." Furthermore, terms ending in "(s)" may mean "at least one" or "one or more."

Furthermore, the expressions "based on," "on the basis of," or "according to" used in the present specification mean "based at least in part on," and do not mean "based solely on" a single element one.

Technical features individually described in a single drawing in the present specification may be implemented individually or simultaneously.

The following examples of the present specification may be applied to various wireless communication systems. For example, the following examples of the present specification may be applied to wireless local area network (WLAN) systems. For example, the present specification may be applied to the IEEE 802.11a/g/n/ac/ax/be/bn standards. Furthermore, the examples of the present specification may also be applied to the Ultra High Reliability (UHR) standard or next-generation WLAN standards that enhance IEEE 802.1 1bn. Additionally, examples of the present specification may be applied to mobile communication systems. For example, it may be applied to mobile communication systems based on Long Term Evolution (LTE) and its evolutions based on the 3rd Generation Partnership Project (3GPP) standards.

Hereinafter, to explain the technical features of the present specification, technical features to which the present specification can be applied will be described.

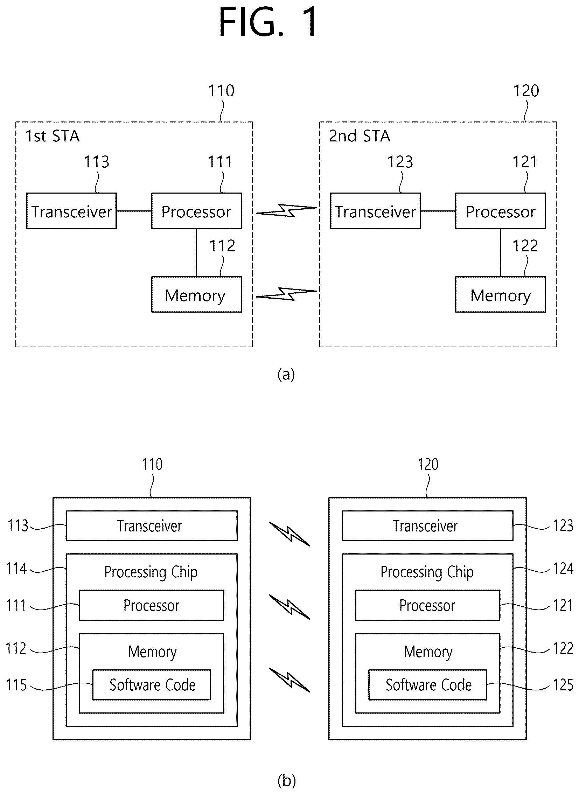

Figure 1 illustrates an example of a transmitting device and/or receiving device of the present specification.

The example of Figure 1 can perform various technical features described below. Figure 1 relates to at least one STA (station). For example, the STAs (110, 120) of the present specification may also be referred to by various names, such as a mobile terminal, a wireless device, a wireless transmit/receive unit (WTRU), a user equipment (UE), a mobile station (MS), a mobile subscriber unit (MS), or simply a user. The STAs (110, 120) of the present specification may also be referred to by various names, such as a network, a base station, a Node-B, an access point (AP), a repeater, a router, or a relay. The STAs (110, 120) of the present specification may be referred to by various names, such as a receiving apparatus, a transmitting apparatus, a receiving STA, a transmitting STA, a receiving device, or a transmitting device.

For example, the STAs (110, 120) of the present specification may function as an access point (AP) or a non-AP. That is, the STAs (110, 120) of the present specification may perform the functions of an AP and/or a non-AP STA. In the present specification, an AP may also be referred to as an AP STA.

The STAs (110, 120) of the present specification may support various communication standards other than the IEEE 802.11 standard. For example, they may support communication standards based on the 3GPP standard (e.g., LTE, LTE-A, 5G NR standards). Furthermore, the STAs of the present specification may be implemented in various devices, such as mobile phones, vehicles, and personal computers. Additionally, the STA of the present specification can support communication for various communication services, such as voice calls, video calls, data communications, and autonomous driving (self-driving).

In the present specification, the STAs (110, 120) may include a medium access control (MAC) and a physical layer interface for wireless media that conforms to the IEEE 802.11 standard.

The STAs (110, 120) are described below based on sub-drawing (a) of FIG. 1.

The first STA (110) may include a processor (111), memory (112), and a transceiver (113). The illustrated processor, memory, and transceiver may be implemented as separate chips, or at least two blocks/functions may be implemented on a single chip.

The transceiver (113) of the first STA performs signal transmission and reception operations. Specifically, it can transmit and receive IEEE 802.11 packets (e.g., IEEE 802.11a/b/g/n/ac/ax/be, etc.).

For example, the first STA (110) can perform the intended operation of an AP. For example, the processor (111) of the AP can receive a signal via the transceiver (113), process the received signal, generate a transmission signal, and perform control for signal transmission. The memory (112) of the AP can store a signal received via the transceiver (113) (e.g., a received signal) and a signal to be transmitted via the transceiver (e.g., a transmitted signal).

For example, the second STA (120) can perform the intended operation of a non-AP STA. For example, the transceiver (123) of the non-AP can perform signal transmission and reception operations. Specifically, it can transmit and receive IEEE 802.11 packets (e.g., IEEE 802.11a/b/g/n/ac/ax/be, etc.).

For example, the processor (121) of the non-AP STA can receive signals via the transceiver (123), process the received signals, generate transmission signals, and perform control for signal transmission. The memory (122) of the non-AP STA can store signals received via the transceiver (123) (e.g., received signals) and signals to be transmitted via the transceiver (e.g., transmitted signals).

For example, the operations of a device designated as an AP in the following specification can be performed by the first STA (110) or the second STA (120). For example, if the first STA (110) is an AP, the operation of the device indicated as the AP is controlled by the processor (111) of the first STA (110), and a related signal may be transmitted or received through the transceiver (113) controlled by the processor (111) of the first STA (110). In addition, control information related to the operation of the AP or the transmission/reception signal of the AP may be stored in the memory (112) of the first STA (110). In addition, if the second STA (110) is an AP, the operation of the device indicated as the AP is controlled by the processor (121) of the second STA (120), and a related signal may be transmitted or received through the transceiver (123) controlled by the processor (121) of the second STA (120). In addition, control information related to the operation of the AP or the transmission/reception signals of the AP may be stored in the memory (122) of the second STA (110).

For example, the operation of a device indicated as a non-AP (or User-STA) in the following specification may be performed in the first STA (110) or the second STA (120). For example, if the second STA (120) is a non-AP, the operation of the device indicated as a non-AP may be controlled by the processor (121) of the second STA (120), and related signals may be transmitted or received through the transceiver (123) controlled by the processor (121) of the second STA (120). In addition, control information related to the operation of the non-AP or the transmission/reception signals of the AP may be stored in the memory (122) of the second STA (120). For example, if the first STA (110) is a non-AP, the operation of a device designated as a non-AP is controlled by the processor (111) of the first STA (110), and related signals may be transmitted or received through a transceiver (113) controlled by the processor (111) of the first STA (120). Furthermore, control information related to the operation of the non-AP or the transmission/reception signals of the AP may be stored in the memory (112) of the first STA (110).

In the following specifications, (transmitting/receiving) STA, first STA, second STA, STA1, STA2, AP, first AP, second AP, AP1, AP2, (transmitting/receiving) Terminal, (transmitting/receiving) device, (transmitting/receiving) apparatus, network, etc., may refer to the STA (110, 120) in Figure 1. For example, devices indicated without specific drawing symbols as (transmitting/receiving) STA, First STA, Second STA, STA1, STA2, AP, First AP, Second AP, AP1, AP2, (transmit/receive) terminal, (transmit/receive) device, (transmit/receive) apparatus, network, etc., may also refer to the STA (110, 120) in Figure 1. For example, in the following example, the operation of various STAs transmitting and receiving signals (e.g., PPDU) may be performed by the transceivers (113, 123) in Figure 1. Additionally, in the following example, the actions of various STAs generating transmission/reception signals or performing data processing or calculations in advance for transmission/reception signals may be performed by the processor (111, 121) in Figure 1. For example, an example of the operation of generating transmission/reception signals or performing data processing or calculations in advance for transmission/reception signals is: 1) determining/obtaining/configuring/calculating/decoding/encoding the bit information of the subfields (SIG, STF, LTF, Data) included in the PPDU; 2) determining/configuring/acquiring time resources or frequency resources (e.g., subcarrier resources) used for the subfields (SIG, STF, LTF, Data) included in the PPDU; 3) determining/configuring/acquiring specific sequences (e.g., pilot sequences, STF/LTF sequences, extra sequences applied to SIG) used for the subfields (SIG, STF, LTF, Data) included in the PPDU; 4) power control actions and/or power saving actions applied to STA, 5) actions related to determining/obtaining/configuring/calculating/decoding/encoding ACK signals. Additionally, in the following example, various information (e.g., information related to fields/subfields/control fields/parameters/power, etc.) used by various STAs for determining/acquiring/configuring/calculating/decoding/encoding transmission/reception signals may be stored in the memory (112, 122) shown in Figure 1.

The device/STA of sub-drawing (a) of FIG. 1 described above can be modified as shown in sub-drawing (b) of FIG. 1. The STAs (110, 120) of the present specification will now be described based on sub-drawing (b) of FIG. 1.

For example, the transceivers (113, 123) illustrated in sub-drawing (b) of FIG. 1 can perform the same functions as the transceivers illustrated in sub-drawing (a) of FIG. 1 described above. For example, the processing chip (114, 124) illustrated in sub-drawing (b) of FIG. 1 may include a processor (111, 121) and a memory (112, 122). The processor (111, 121) and the memory (112, 122) illustrated in sub-drawing (b) of FIG. 1 may perform the same functions as the processor (111, 121) and the memory (112, 122) illustrated in sub-drawing (a) of FIG. 1 described above.

The mobile terminal, wireless device, Wireless Transmit/Receive Unit (WTRU), User Equipment (UE), Mobile Station (MS), Mobile Subscriber Unit, user, user STA, network, Base Station, Node-B, Access Point (AP), repeater, router, relay, receiving device, transmitting device, receiving STA, transmitting STA, receiving Device, transmitting Device, receiving Apparatus, and/or transmitting Apparatus described below may refer to the STA (110, 120) illustrated in the sub-drawings (a)/(b) of FIG. 1, or may refer to the processing chip (114, 124) illustrated in the sub-drawing (b) of FIG. 1. That is, the technical feature of the present specification may be performed in the STA (110, 120) illustrated in the sub-drawings (a)/(b) of FIG. 1, or may be performed only in the processing chip (114, 124) illustrated in the sub-drawings (b) of FIG. 1. For example, the technical feature that the transmitting STA transmits a control signal may be understood as a technical feature that the control signal generated in the processor (111, 121) illustrated in the sub-drawings (a)/(b) of FIG. 1 is transmitted through the transceiver (113, 123) illustrated in the sub-drawings (a)/(b) of FIG. 1. Alternatively, the technical feature that the transmitting STA transmits a control signal may be understood as a technical feature that the control signal to be transmitted to the transceiver (113, 123) is generated in the processing chip (114, 124) illustrated in the sub-drawings (b) of FIG. 1.

For example, the technical feature of a receiving STA receiving a control signal can be understood as a technical feature of a control signal being received by a transceiver (113, 123) illustrated in sub-drawing (a) of FIG. 1. Alternatively, the technical feature of a receiving STA receiving a control signal can be understood as a technical feature of a control signal received by a transceiver (113, 123) illustrated in sub-drawing (a) of FIG. 1 being acquired by a processor (111, 121) illustrated in sub-drawing (a) of FIG. 1. Alternatively, the technical feature of a receiving STA receiving a control signal can be understood as a technical feature of a control signal received by a transceiver (113, 123) illustrated in sub-drawing (b) of FIG. 1 being acquired by a processing chip (114, 124) illustrated in sub-drawing (b) of FIG. 1.

Referring to sub-drawing (b) of FIG. 1, software code (115, 125) may be included in the memory (112, 122). The software code (115, 125) may include instructions that control the operation of the processor (111, 121). The software code (115, 125) may be included in various programming languages.

The processor (111, 121) or processing chip (114, 124) illustrated in FIG. 1 may include an application-specific integrated circuit (ASIC), another chipset, logic circuit, and/or data processing device. The processor may be an application processor (AP). For example, the processor (111, 121) or processing chip (114, 124) illustrated in FIG. 1 may include at least one of a digital signal processor (DSP), a central processing unit (CPU), a graphics processing unit (GPU), and a modem (modulator and demodulator). For example, the processors (111, 121) or processing chips (114, 124) illustrated in FIG. 1 may be a SNAPDRAGON^{®} series processor manufactured by Qualcomm^{®}, an EXYNOS^{®} series processor manufactured by Samsung^{®}, an A series processor manufactured by Apple^{®}, a HELIO^{®} series processor manufactured by MediaTek^{®}, an ATOM^{®} series processor manufactured by INTEL^{®}, or an enhanced processor thereof.

In the present specification, "uplink" may refer to a link for communication from a non-AP STA to an AP STA, and uplink PPDUs/packets/signals, etc. may be transmitted via the uplink. Furthermore, in the present specification, "downlink" may refer to a link for communication from an AP STA to a non-AP STA, and downlink PPDUs/packets/signals, etc. may be transmitted via the downlink.

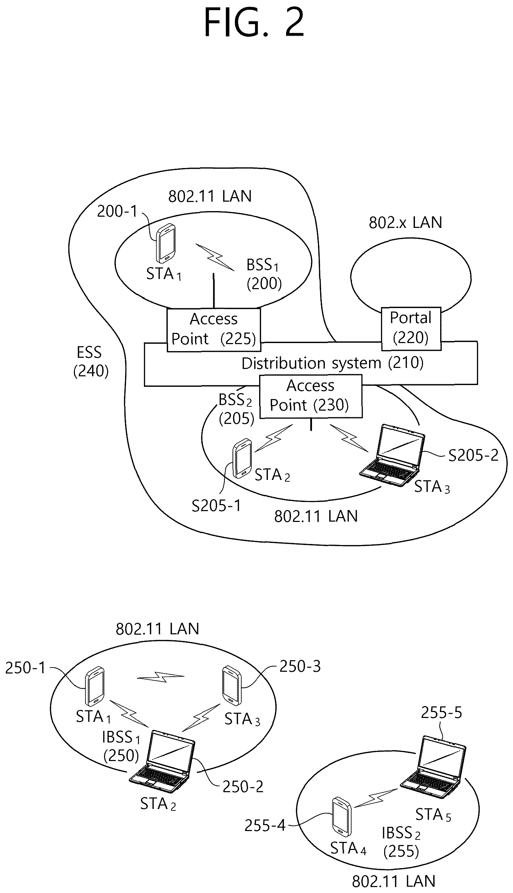

Figure 2 is a conceptual diagram illustrating the structure of a wireless local area network (WLAN).

The top of Figure 2 illustrates the structure of an infrastructure BSS (basic service set) of the Institute of Electrical and Electronic Engineers (IEEE) 802.11 standard.

Referring to the top of Figure 2, the wireless LAN system may include one or more infrastructure BSSs (200, 205) (hereinafter referred to as BSS). A BSS (200, 205) is a set of APs (access points, 225) and STAs (stations, 200-1) that have successfully synchronized and can communicate with each other; it does not refer to a specific area. A BSS (205) may include one or more connectable STAs (205-1, 205-2) connected to a single AP (230).

A BSS may include at least one STA, an AP (225, 230) that provides a distribution service, and a distribution system (DS, 210) that connects multiple APs.

A distributed system (210) can connect multiple BSSs (200, 205) to implement an extended service set (ESS) 240. An ESS (240) can be used as a term to indicate a network formed by connecting one or more APs through the distributed system (210). APs included in a single ESS (240) can have the same SSID (service set identifier).

A portal (220) can serve as a bridge, connecting a wireless LAN network (IEEE 802.11) to another network (e.g., 802.X).

In a BSS, such as the upper portion of FIG. 2, a network between APs (225, 230) and a network between APs (225, 230) and STAs (200-1, 205-1, 205-2) can be implemented. However, it may also be possible to establish a network and perform communication between STAs without an AP (225, 230). A network that establishes a network and performs communication between STAs without an AP (225, 230) is defined as an ad-hoc network or an independent basic service set (IBSS).

The bottom of Figure 2 is a conceptual diagram illustrating an IBSS.

Referring to the bottom of Figure 2, an IBSS is a BSS that operates in ad-hoc mode. Since an IBSS does not include an AP, there is no centralized management entity. That is, in the IBSS, STAs (250-1, 250-2, 250-3, 255-4, 255-5) are managed in a distributed manner. In IBSS, all STAs (250-1, 250-2, 250-3, 255-4, 255-5) can be mobile STAs, and access to distributed systems is not permitted, forming a self-contained network.

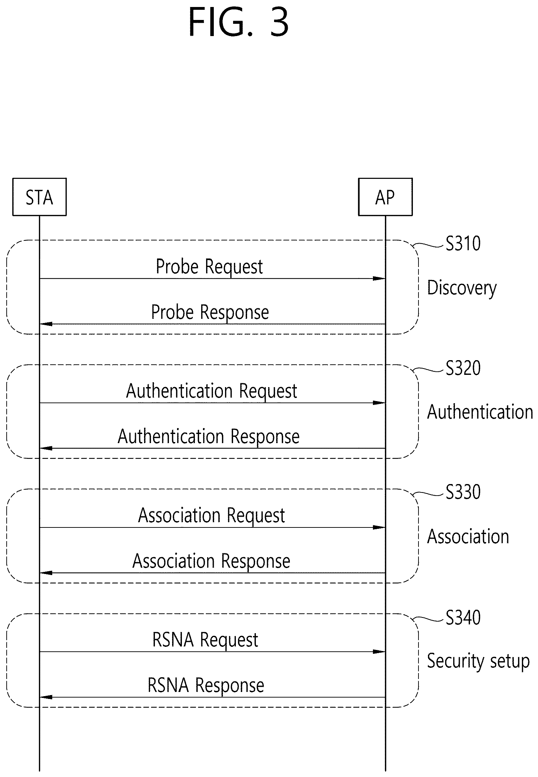

Figure 3 is a diagram illustrating a typical link setup process.

In the illustrated step S310, a STA may perform a network discovery operation. This network discovery operation may include scanning. That is, for a STA to access a network, it must find a network it can join. Before joining a wireless network, a STA must identify compatible networks. The process of identifying networks in a specific area is called scanning. Scanning methods include active scanning and passive scanning.

Figure 3 illustrates a network discovery operation that includes an active scanning process as an example. In active scanning, a STA performing scanning transmits a probe request frame to discover nearby APs while moving through channels and awaits a response. The responder transmits a probe response frame to the STA that transmitted the probe request frame in response to the probe request frame. Here, the responder may be the STA that last transmitted a beacon frame in the BSS of the channel being scanned. In a BSS, the AP transmits the beacon frame, making it the responder. In an IBSS, STAs within the IBSS take turns transmitting beacon frames, so the responder is not fixed. For example, a STA that transmits a probe request frame on channel 1 and receives a probe response frame on channel 1 may store the BSS-related information contained in the received probe response frame and move to the next channel (e.g., channel 2) to perform scanning in the same manner (e.g., transmitting and receiving probe requests and responses on channel 2).

Although not shown in the example of Figure 3, the scanning operation can also be performed passively. A STA performing scanning based on passive scanning may wait for a beacon frame while moving between channels. A beacon frame, a management frame in IEEE 802.11, announces the presence of a wireless network and is periodically transmitted to scanning STAs to discover and join the network. In the BSS, the AP periodically transmits beacon frames, while in the IBSS, STAs within the IBSS take turns transmitting beacon frames. When a scanning STA receives a beacon frame, it stores the BSS information contained in the beacon frame and moves to a different channel, recording the beacon frame information on each channel. Upon receiving a beacon frame, the STA stores the BSS-related information contained in the received beacon frame and moves to the next channel, performing scanning on the next channel using the same method.

A STA that discovers a network can perform an authentication process in step S320. This authentication process can be referred to as the first authentication process to clearly distinguish it from the security setup operation of step S340, described below. The authentication process of S320 may include a process in which the STA transmits an authentication request frame to the AP, and the AP transmits an authentication response frame to the STA in response. The authentication frame used for the authentication request/response corresponds to a management frame.

The authentication frame may include information such as an authentication algorithm number, an authentication transaction sequence number, a status code, a challenge text, a Robust Security Network (RSN), and a Finite Cyclic Group (FCG).

The STA may transmit the authentication request frame to the AP. The AP may determine whether to grant authentication to the STA based on the information contained in the received authentication request frame. The AP may provide the STA with the result of the authentication process via an authentication response frame.

A successfully authenticated STA may perform the connection process based on step S330. The association process involves the STA sending an association request frame to the AP, and the AP responding by sending an association response frame to the STA. For example, the association request frame may include information related to various capabilities, such as a beacon listen interval, a service set identifier (SSID), supported rates, supported channels, RSN, mobility domain, supported operating classes, a Traffic Indication Map Broadcast request, and interworking service capabilities. For example, the association response frame may include information related to various capabilities, status codes, Association ID (AID), supported rates, Enhanced Distributed Channel Access (EDCA) parameter sets, Received Channel Power Indicator (RCPI), Received Signal to Noise Indicator (RSNI), mobility domains, timeout intervals (association comeback times), overlapping BSS scan parameters, TIM broadcast responses, QoS maps, etc.

Subsequently, in step S340, the STA may perform a security setup process. The security setup process in step S340 may include, for example, a process of setting up a private key through four-way handshaking using an Extensible Authentication Protocol over LAN (EAPOL) frame.

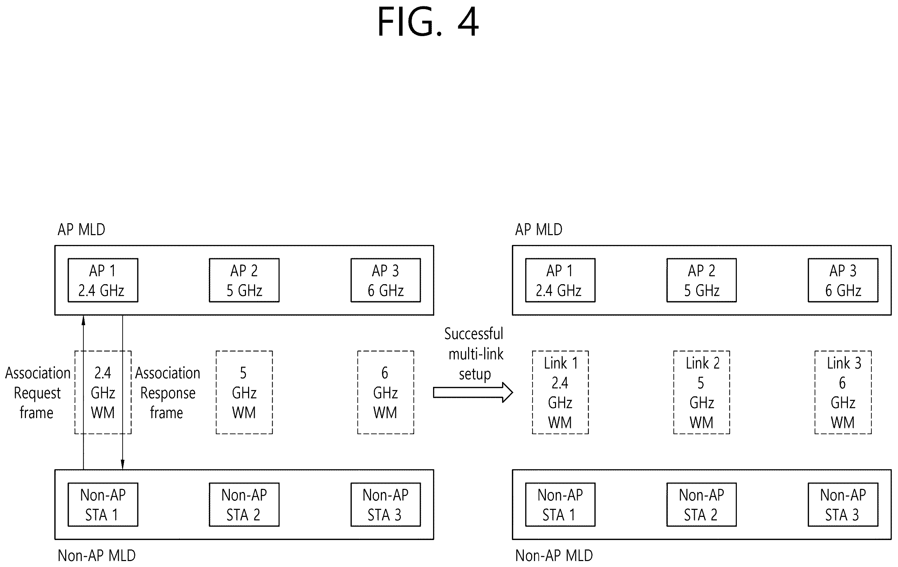

Figure 4 illustrates an embodiment of a multi-link (ML).

As illustrated in Figure 4, multiple multi-link devices (MLDs) can communicate via a multi-link. The MLDs can be categorized into AP MLDs, which include multiple AP STAs, and non-AP MLDs, which include multiple non-AP STAs. Specifically, the AP MLD may include affiliated APs (e.g., AP STAs), and the non-AP MLD may include affiliated STAs (e.g., non-AP STAs, or user-STAs).

The multi-link may include a first link and a second link, and different channels/subchannels/frequency resources may be allocated to the first and second links. The first and second multi-links may be identified using a 4-bit (or other n-bit) link ID. The first and second links may be configured in the same 2.4 GHz, 5 GHz, or 6 GHz band. Alternatively, the first and second links may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link, in which AP1 and non-AP1 operate, may be defined as a channel/subchannel/frequency resource within the 2.4 GHz band. Furthermore, in the example of FIG. 4, the second link, in which AP2 and non-AP2 operate, may be defined as a channel/subchannel/frequency resource within the 5 GHz band. Additionally, in the example of FIG. 4, the third link where AP3 and non-AP3 operate can be defined as a channel/subchannel/frequency resource within the 6 GHz band.

In the example of FIG. 4, AP1 can initiate a multilink setup procedure (ML setup procedure) by transmitting an Association Request frame to non-AP STA1. In the example of FIG. 4, non-AP STA1 can transmit an Association Response frame in response to the Association Request frame. Each AP (e.g., AP1/2/3) depicted in FIG. 4 may be identical to the APs depicted in FIG. 1 and/or FIG. 2, and each non-AP (e.g., non-AP1/2/3) depicted in FIG. 4 may be identical to the STAs (e.g., user STAs or non-AP STAs) depicted in FIG. 1 and/or FIG. 2.

The specific features of the present specification are not limited to the specific features depicted in FIG. 4. That is, the number of links can be defined in various ways, and multiple links can be defined in various ways within at least one band.

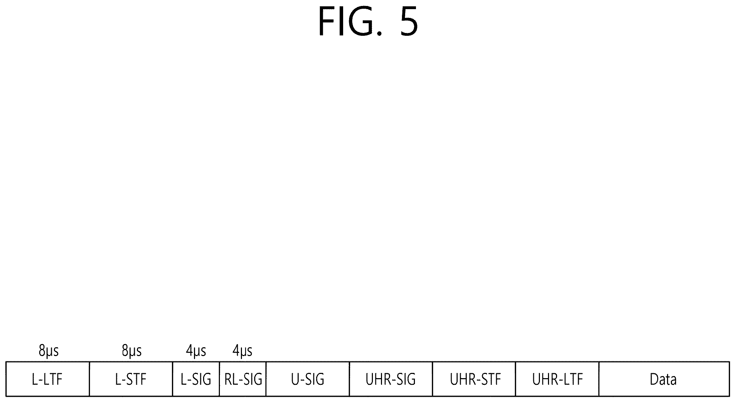

Figure 5 illustrates a PPDU (physical protocol data unit or physical layer (PHY) protocol data unit) transmitted/received by a STA of the present specification.

A STA (e.g., an AP STA, a non-AP STA, an AP MLD, or a non-AP MLD) of the present specification can transmit and/or receive the PPDU of Figure 5. The PPDU described herein may have, for example, the structure of Figure 5. Furthermore, the PPDU described herein, an Ultra High Reliability (UHR) PPDU, may be referred to by various names, such as a transmission PPDU, a reception PPDU, a first type PPDU, or an Nth type PPDU. The PPDU described herein may be used in a WLAN system defined according to IEEE 802.11bn and/or a next-generation WLAN system that enhances IEEE 802.11bn.

The PPDU of Figure 5 may relate to various PPDU types used in a UHR system. For example, the example of FIG. 5 can be used for at least one of single-user (SU) mode/type/transmission, multi-user (MU) mode/type/transmission, and null data packet (NDP) mode/type/transmission related to channel sounding. For example, if the example of FIG. 5 relates to NDP, the illustrated Data field may be omitted. If the PPDU of FIG. 5 is used for Trigger-based (TB) mode, the UHR-SIG of FIG. 5 may be omitted. In other words, a STA that has received a Trigger frame for UL-MU (Uplink-MU) communication may transmit a PPDU with the UHR-SIG omitted in the example of FIG. 5.

In FIG. 5, L-STF or UHR-LTF may be referred to as a preamble or physical preamble, and may be generated/transmitted/received/acquired/decoded in the physical layer (included in the transmitting/receiving STA).

Each block illustrated in FIG. 5 may be referred to as a field/subfield/signal, etc. The names of these fields/subfields/signals may be, as illustrated in FIG. 5, a legacy short training field (L-STF), a legacy long training field (L-LTF), a legacy signal (L-SIG), a repeated L-SIG (RL-SIG), Universal Signal (U-SIG), UHR-signal (UHR-SIG), etc.

The subcarrier spacing of the L-STF, L-LTF, L-SIG, RL-SIG, U-SIG, and UHR-SIG fields in FIG. 5 may be set to 312.5 kHz, and the subcarrier spacing of the UHR-STF, UHR-LTF, and Data fields may be set to 78.125 kHz. That is, the tone indices (or subcarrier indices) of the L-STF, L-LTF, L-SIG, RL-SIG, U-SIG, and UHR-SIG fields may be expressed in units of 312.5 kHz, and the tone indices (or subcarrier indices) of the UHR-STF, UHR-LTF, and Data fields may be expressed in units of 78.125 kHz.

In the PPDU in FIG. 5, L-LTF and L-STF may be identical to conventional fields (e.g., non-HT LTF and non-HT STF defined in conventional WLAN standards).

The L-SIG field of FIG. 5 may include, for example, 24 bits of bit information. For example, the 24 bits of information may include a 4 bit Rate field, a 1 bit Reserved bit, a 12 bit Length field, a 1 bit Parity bit, and a 6 bit Tail bit. For example, the 12 bit Length field may include information about the length or time duration of the PPDU. For example, the value of the 12 bit Length field may be determined based on the type of the PPDU. For example, if the PPDU is a non-HT (non-High Throughput), HT (High Throughput), VHT (Very High Throughput) PPDU, or an EHT (extremely high throughput) PPDU or UHR PPDU, the value of the Length field may be determined as a multiple of 3. For example, if the PPDU is a HE PPDU, the value of the Length field may be determined as "a multiple of 3 + 1" or "a multiple of 3 + 2". In other words, for non-HT, HT, VHT PPDUs, EHT PPDUs, and UHR PPDUs, the Length field value can be determined as a multiple of 3. For HE (High Efficiency) PPDUs, the Length field value can be determined as "a multiple of 3 + 1" or "a multiple of 3 + 2." In other words, the Length field in a UHR PPDU is set to a value satisfying the condition that the remainder is zero when LENGTH is divided by 3.

For example, a (non-AP and AP) STA can apply BCC encoding based on a code rate of 1/2 to the 24-bit information in the L-SIG field. The transmitting STA can then acquire 48 BCC encoding bits. BPSK modulation can be applied to the 48 encoding bits, generating 48 BPSK symbols. The transmitting STA can map 48 BPSK symbols to positions other than the pilot subcarriers {subcarrier indices -21, -7, +7, +21} and the DC subcarrier {subcarrier index 0}. Consequently, the 48 BPSK symbols can be mapped to subcarrier indices -26 to -22, -20 to -8, -6 to -1, +1 to +6, +8 to +20, and +22 to +26. The transmitting STA can additionally map signals {-1, -1, -1, 1} to subcarrier indices {-28, -27, +27, +28}. These signals can be used for channel estimation for the frequency domain corresponding to {-28, -27, +27, +28}.

For example, (non-AP and AP) STAs can generate RL-SIGs that are generated identically to L-SIGs. BPSK modulation can be applied to RL-SIG. The receiving (non-AP and AP) STA can determine whether the received PPDU is a HE PPDU, EHT PPDU, or UHR PPDU based on the presence of RL-SIG. In other words, the receiving (non-AP and AP) STA can determine whether the received PPDU is a HE PPDU, EHT PPDU, or UHR PPDU if RL-SIG is present. In other words, the receiving (non-AP and AP) STA can determine whether the received PPDU is a non-HT PPDU, HT PPDU, or VHT PPDU if RL-SIG is not present. In other words, the RL-SIG field is a repeat of the L-SIG field and is used to differentiate a UHR PPDU from a non-HT PPDU, HT PPDU, and VHT PPDU.

A Universal Signal-Integrated (U-SIG) may be inserted after the RL-SIG in Figure 5. The U-SIG may be referred to by various names, such as the first SIG field, the first SIG, the first type SIG, the control signal, the control signal field, the first (type) control signal, the common control field, and the common control signal.

The U-SIG may contain N bits of information and may include information for identifying the type of the EHT PPDU. For example, the U-SIG may be composed based on two symbols (e.g., two consecutive/contiguous OFDM symbols). Each symbol for the U-SIG (e.g., the OFDM symbol) may have a duration of 4 µs. Each symbol of the U-SIG may be used to transmit 26 bits of information. For example, each symbol of the U-SIG may be transmitted and received based on 52 data tones and 4 pilot tones.

For example, A bit information (e.g., 52 uncoded bits) can be transmitted through U-SIG, and the first symbol of U-SIG can transmit the first X bits of information (e.g., 26 uncoded bits) out of the total A bit information, and the second symbol of U-SIG can transmit the remaining Y bits of information (e.g., 26 uncoded bits) out of the total A bit information. For example, the transmitting STA can obtain 26 uncoded bits included in each U-SIG symbol. The transmitting STA can perform convolutional encoding (e.g., BCC encoding) based on a rate of R=1/2 to generate 52 coded bits, and perform interleaving on the 52 coded bits. The transmitting STA can perform BPSK modulation on the interleaved 52 BPSK symbols to generate 52 BPSK symbols allocated to each U-SIG symbol. A single U-SIG symbol can be transmitted based on 56 tones (subcarriers) ranging from subcarrier index -28 to subcarrier index +28, excluding DC index 0. The 52 BPSK symbols generated by the transmitting STA can be transmitted based on the remaining tones (subcarriers) excluding the pilot tones -21, -7, +7, and +21.

For example, the A-bit information (e.g., 52 uncoded bits) transmitted by the U-SIG can include a CRC field (e.g., a 4-bit field) and a tail field (e.g., a 6-bit field). The CRC field and tail field can be transmitted via the second symbol of the U-SIG. The CRC field can be generated based on the 26 bits allocated to the first symbol of the U-SIG and the remaining 16 bits within the second symbol, excluding the CRC/tail field, and can be generated based on a conventional CRC calculation algorithm. Additionally, the tail field can be used to terminate the trellis of the convolutional decoder and can be set to "000000," for example.

The A-bit information (e.g., 52 uncoded bits) transmitted by the U-SIG (or U-SIG field) can be divided into version-independent bits and version-dependent bits. For example, the size of the version-independent bits can be fixed or variable. For example, the version-independent bits can be assigned only to the first symbol of the U-SIG, or the version-independent bits can be assigned to both the first and second symbols of the U-SIG. For example, the version-independent bits and version-dependent bits can be referred to by various names, such as the first control bit and the second control bit.

For example, the version-independent bits of the U-SIG can include a 3-bit PHY version identifier. For example, a 3-bit PHY version identifier may include information related to the PHY version of a transmitted/received PPDU. For example, a first value (e.g., a value of 000) of the 3-bit PHY version identifier may indicate that the transmitted/received PPDU is an EHT PPDU. Additionally, a second value (e.g., a value of 001) of the 3-bit PHY version identifier may indicate that the transmitted/received PPDU is a UHR PPDU.

In other words, when an (AP/non-AP) STA transmits an EHT PPDU, it may set the 3-bit PHY version identifier to the first value. In other words, a receiving (AP/non-AP) STA may determine that the received PPDU is an EHT PPDU based on a PHY version identifier having the first value, and may determine that the received PPDU is a UHR PPDU based on a PHY version identifier having the second value.

For example, the version-independent bits of U-SIG may include a 1-bit UL/DL flag field. The first value of the 1-bit UL/DL flag field relates to UL communication, and the second value of the UL/DL flag field relates to DL communication.

For example, the version-independent bits of the U-SIG may include information about the length of the TXOP and information about the BSS color ID.

For example, if the UHR PPDU is classified into various types (e.g., a type related to SU transmission (performed based on UL or DL), a type related to DL transmission, a type related to NDP transmission, a type related to DL non-MU-MIMO, a type related to DL MU-MIMO, a type related to Multi-AP operation, a type related to CBF (Coordinated beamforming), SR (Spatial Reuse), a type related to C-OFDMA (Coordinated OFDMA), a type related to C-TDMA (Coordinated TDMA)), information about the type of the EHT PPDU (e.g., 2-bit or 3-bit information) may be included in the version-dependent bits of the U-SIG.

For example, U-SIG may include 1) a bandwidth field including information about bandwidth, 2) a field including information about the Modulation and Coding Scheme (MCS) technique applied to UHR-SIG, 3) an indication field including information about whether dual subcarrier modulation (DCM) technique is applied to UHR-SIG, 4) a field including information about the number of symbols used for UHR-SIG, 5) a field including information about whether UHR-SIG is generated across the entire band, 6) a field including information about the type of UHR-LTF/STF, and 7) a field indicating the length of UHR-LTF and the CP length.

Preamble puncturing may be applied to the PPDU of FIG. 5. Preamble puncturing means applying puncturing to a portion of the entire band of the PPDU (e.g., the secondary 20 MHz band). For example, when an 80 MHz PPDU is transmitted, the STA can apply puncturing to the secondary 20 MHz band within the 80 MHz band and transmit the PPDU only through the primary 20 MHz band and the secondary 40 MHz band.

For example, the preamble puncturing pattern can be preset. For example, if the first puncturing pattern is applied, puncturing can be applied only to the secondary 20 MHz band within the 80 MHz band. For example, if the second puncturing pattern is applied, puncturing can be applied only to one of the two secondary 20 MHz bands included in the secondary 40 MHz band within the 80 MHz band. For example, if the third puncturing pattern is applied, puncturing can be applied only to the secondary 20 MHz band included in the primary 80 MHz band within the 160 MHz band (or 80+80 MHz band). For example, when the fourth puncturing pattern is applied, puncturing may be applied to at least one 20 MHz channel not included in the primary 40 MHz band, while the primary 40 MHz band is present within the 160 MHz band (or the 80+80 MHz band).

Information related to preamble puncturing applied to a PPDU may be included in the U-SIG and/or UHR-SIG. For example, the first field of the U-SIG may include information related to the contiguous bandwidth of the PPDU, and the second field of the U-SIG may include information related to preamble puncturing applied to the PPDU.

For example, the U-SIG and UHR-SIG may include information related to preamble puncturing based on the following method. If the bandwidth of the PPDU exceeds 80 MHz, the U-SIG may be configured individually in 80 MHz units. For example, if the bandwidth of a PPDU is 160 MHz, the PPDU may include a first U-SIG for a first 80 MHz band and a second U-SIG for a second 80 MHz band. In this case, a first field of the first U-SIG may include information about the 160 MHz bandwidth, and a second field of the first U-SIG may include information about preamble puncturing applied to the first 80 MHz band (e.g., information about a preamble puncturing pattern). In addition, a first field of the second U-SIG may include information about the 160 MHz bandwidth, and a second field of the second U-SIG may include information about preamble puncturing applied to the second 80 MHz band (e.g., information about a preamble puncturing pattern). Meanwhile, the UHR-SIG contiguous to the first U-SIG may include information about preamble puncturing applied to the second 80 MHz band (e.g., information about a preamble puncturing pattern), and the UHR-SIG contiguous to the second U-SIG may include information about preamble puncturing applied to the first 80 MHz band (e.g., information about a preamble puncturing pattern).

Additionally or alternatively, the U-SIG and UHR-SIG may include information related to preamble puncturing based on the following methods. The U-SIG may include information related to preamble puncturing for all bands (e.g., information related to the preamble puncturing pattern). That is, the UHR-SIG does not include information related to preamble puncturing, and only the U-SIG may include information related to preamble puncturing (e.g., information related to the preamble puncturing pattern).

The U-SIG may be configured in 20 MHz units. For example, if an 80 MHz PPDU is configured, the U-SIG may be duplicated. That is, four identical U-SIGs may be included within the 80 MHz PPDU. PPDUs exceeding the 80 MHz bandwidth may include different U-SIGs.

The UHR-SIG of FIG. 5 may include control information for a receiving STA. The UHR-SIG may be transmitted over at least one symbol, each symbol having a length of 4 µs. Information related to the number of symbols used for the UHR-SIG may be included in the U-SIG.

The UHR-SIG provides additional signals to the U-SIG field to enable the STA to interpret/decode the UHR PPDU. The UHR-SIG field may include U-SIG overflow bits common to all users. The UHR-SIG field also includes resource allocation information, allowing the STA to look up resources used in fields including the data field, UHR-STF, and UHR-LTF (e.g., UHR modulated fields of a UHR PPDU).

The frequency resources of the UHR-LTF, UHR-STF, and data fields illustrated in Figure 5 can be determined based on resource units (RUs) defined by multiple subcarriers/tones. That is, the UHR-LTF, UHR-STF, and data fields of the present specification can be transmitted/received via resource units (RUs) defined by multiple subcarriers/tones.

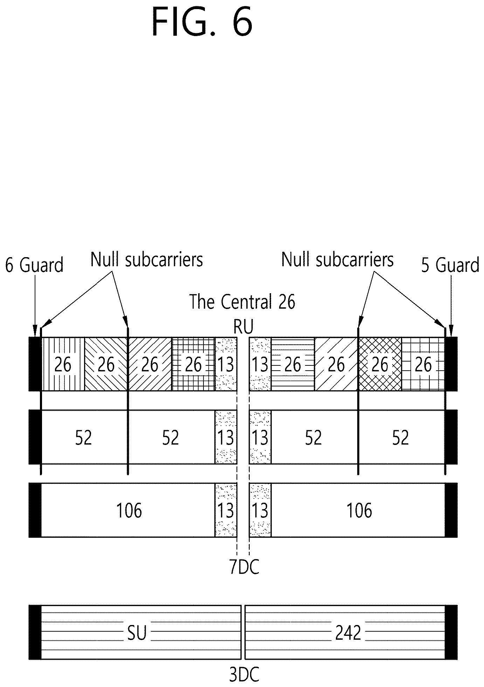

Figure 6 is a diagram illustrating the layout of resource units (RUs) used for a 20MHz PPDU. That is, the UHR-LTF, UHR-STF, and/or data fields included in a 20MHz PPDU can be transmitted/received via at least one of the various RUs defined in Figure 6.

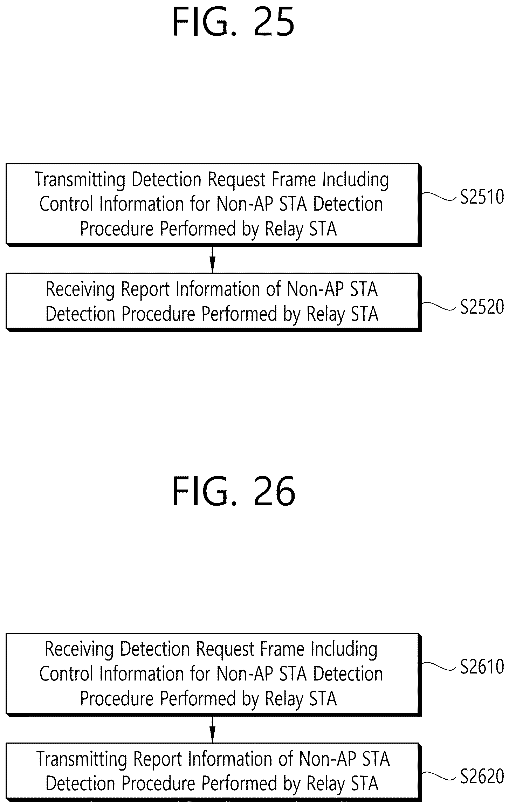

As illustrated at the top of Figure 6, 26 units (e.g., units corresponding to 26 tones) can be arranged. In the leftmost band of the 20 MHz band, six tones can be used as a guard band, and in the rightmost band of the 20 MHz band, five tones can be used as a guard band. Furthermore, seven DC tones can be inserted into the center band (i.e., the DC band), and 26 units, corresponding to 13 tones each, can exist on the left and right sides of the DC band. Furthermore, 26, 52, and 106 units can be allocated to other bands. Each unit can be assigned to a receiving station, i.e., a user.

Meanwhile, the RU arrangement of Figure 6 can be utilized not only for multiple users (MUs) but also for single users (SUs). In this case, as shown at the bottom of Figure 6, a single 242-unit can be used, in which case three DC tones can be inserted.

In the example of Fig. 6, RUs of various sizes, such as 26-RU, 52-RU, 106-RU, and 242-RU, are proposed. Since the specific sizes of these RUs can be expanded or increased, the present embodiment is not limited to the specific sizes of each RU (e.g., the number of corresponding tones). In the present specification, N-RU may be represented as N-tone RU, etc. For example, 26-RU may be represented as 26-tone RU.

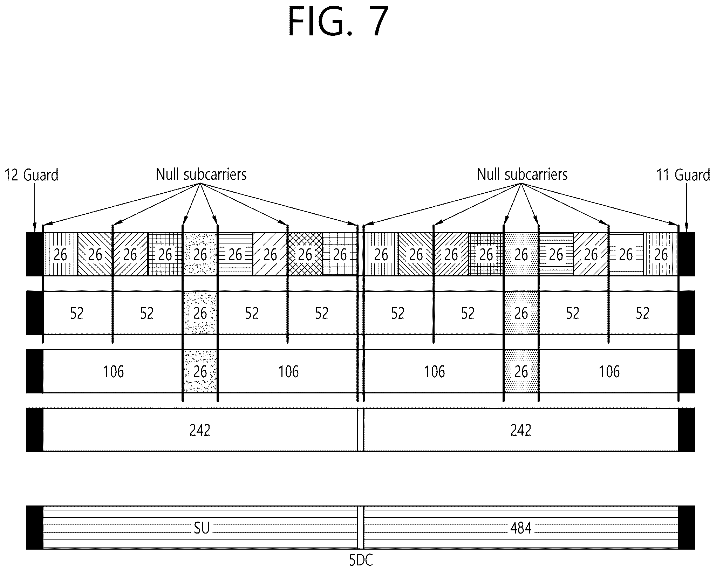

Figure 7 is a diagram illustrating the layout of resource units (RUs) used for a 40MHz PPDU.

Similar to the example in Figure 6, which used RUs of various sizes, the example in Figure 7 can also use RUs of 26, 52, 106, 242, and 484 RUs. Furthermore, five DC tones can be inserted at the center frequency, 12 tones can be used as guard bands in the leftmost band of the 40MHz band, and 11 tones can be used as guard bands in the rightmost band of the 40MHz band.

Also, as illustrated, a 484-RU can be used for a single user. Similarly to the example in Figure 6, the specific number of RUs can be varied.

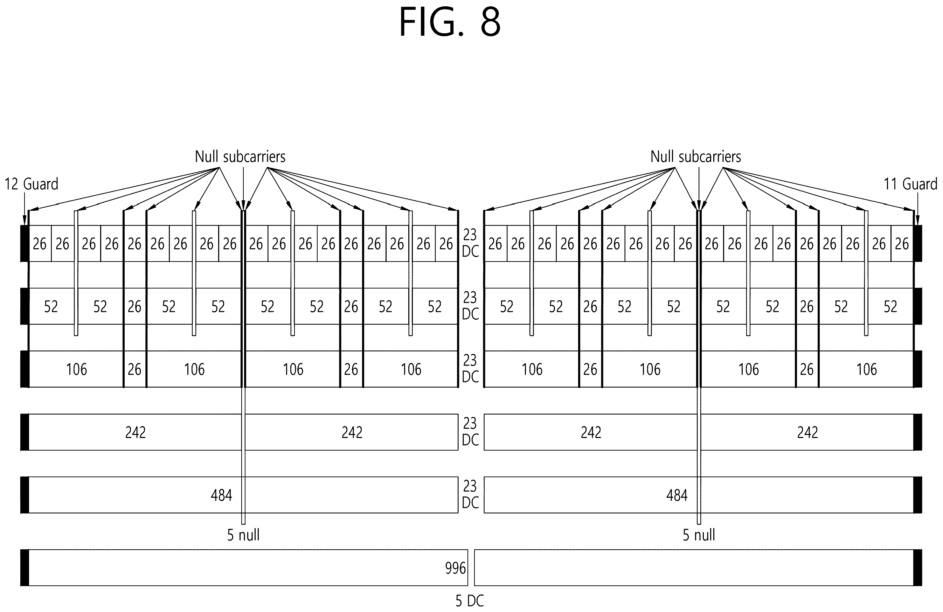

Figure 8 is a diagram illustrating the layout of resource units (RUs) used for an 80MHz PPDU. The arrangement of resource units (RUs) used in the present specification may vary. For example, the arrangement of resource units (RUs) used in the 80 MHz band may vary.

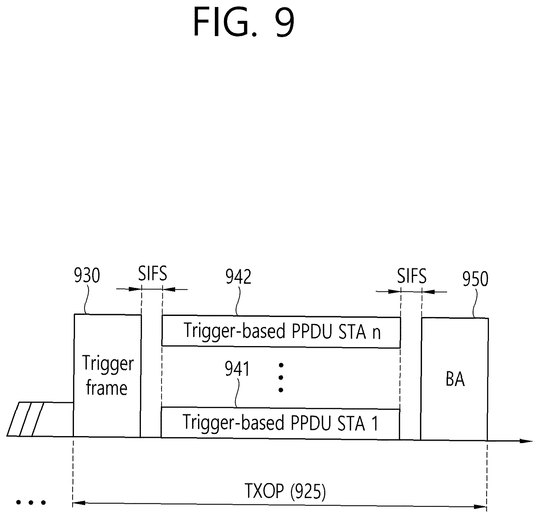

Figure 9 illustrates the operation according to UL-MU. As illustrated, a transmitting STA (e.g., an AP) may acquire a TXOP (925) by performing channel access through contending (e.g., backoff operation) and transmit a Trigger frame (930). That is, the transmitting STA (e.g., an AP) may transmit a PPDU including the Trigger frame (930). Upon receiving the PPDU including the Trigger frame, a TB (trigger-based) PPDU is transmitted after a delay equal to SIFS.

TB PPDUs (941, 942) are transmitted at the same time and may be transmitted from multiple STAs (e.g., user STAs) whose AIDs are indicated in the Trigger frame (930). The ACK frame (950) for the TB PPDU can be implemented in various forms. For example, the ACK frame (950) for the TB PPDU can be implemented in the form of a BA (block ACK).

In FIG. 9, transmission(s) of the Trigger Frame (930), TB PPDUs (941, 942), and/or the ACK frame (950) can be performed within the TXOP (925).

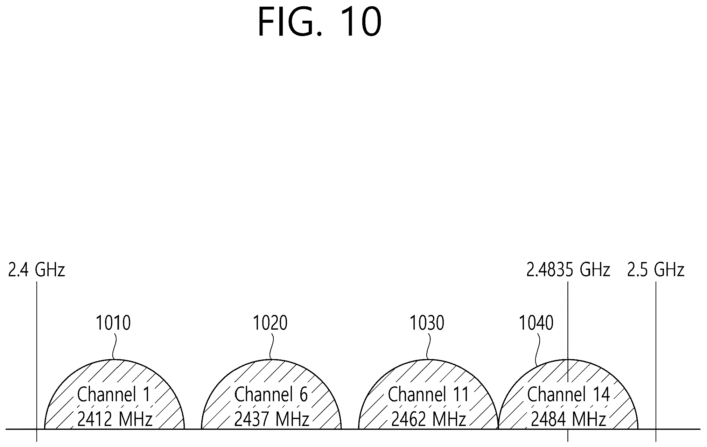

FIG. 10 illustrates an example of channels used/supported/defined within the 2.4 GHz band.

The 2.4 GHz band may also be referred to by other names, such as the first band (band). Furthermore, the 2.4 GHz band may refer to a frequency range in which channels with a center frequency adjacent to 2.4 GHz (e.g., channels with a center frequency between 2.4 and 2.5 GHz) are used/supported/defined.

The 2.4 GHz band may include multiple 20 MHz channels. Each 20 MHz channel within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. Channel indices may be referred to by various names, such as channel numbers. The specific numerical values of the channel indices and center frequencies may vary.

Figure 10 illustrates four channels within the 2.4 GHz band. The illustrated first frequency range (1010) through fourth frequency range (1040) may each include one channel. For example, the first frequency domain (1010) may include channel 1 (a 20 MHz channel having an index of 1). At this time, the center frequency of channel 1 may be set to 2412 MHz. The second frequency domain (1020) may include channel 6. At this time, the center frequency of channel 6 may be set to 2437 MHz. The third frequency domain (1030) may include channel 11. At this time, the center frequency of channel 11 may be set to 2462 MHz. The fourth frequency domain (1040) may include channel 14. At this time, the center frequency of channel 14 may be set to 2484 MHz.

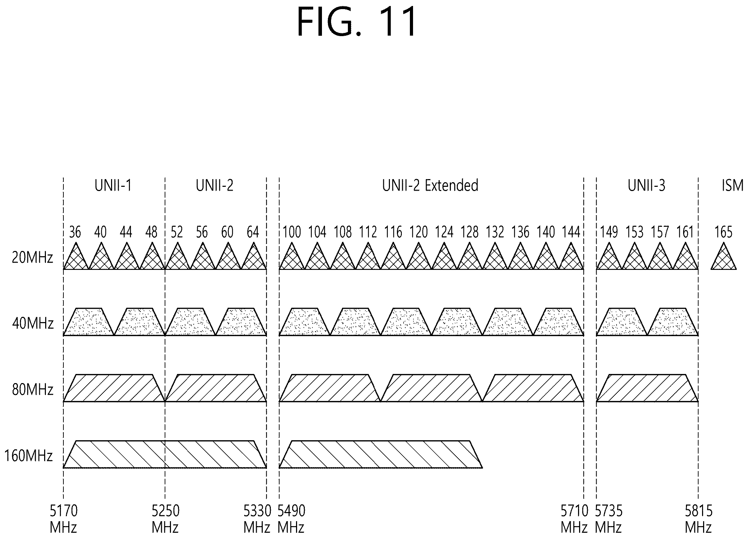

Figure 11 illustrates an example of channels used/supported/defined within the 5 GHz band.

The 5 GHz band may also be referred to as a second band, etc. The 5 GHz band may refer to a frequency range in which channels with a center frequency greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in Figure 11 are subject to change.

The multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2 Extended. UNII-3 may be referred to as UNII-Upper.

Multiple channels can be configured within the 5 GHz band, and the bandwidth of each channel can be variously configured, such as 20 MHz, 40 MHz, 80 MHz, or 160 MHz. For example, the 5170 MHz to 5330 MHz frequency range within UNII-1 and UNII-2 can be divided into eight 20 MHz channels. The 5170 MHz to 5330 MHz frequency range can be divided into four channels via a 40 MHz frequency band. The 5170 MHz to 5330 MHz frequency range can be divided into two channels via an 80 MHz frequency band. Alternatively, the 5170 MHz to 5330 MHz frequency range can be divided into one channel via a 160 MHz frequency band.

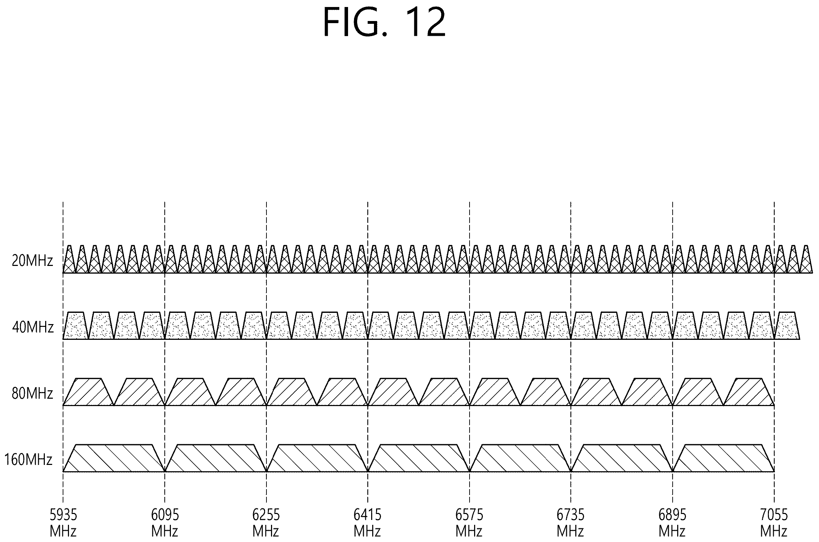

Figure 12 illustrates an example of channels used/supported/defined within the 6 GHz band.

The 6 GHz band may be referred to by other names, such as the third band/band. The 6 GHz band may refer to a frequency range where channels with a center frequency of 5.9 GHz or higher are used, supported, or defined. The specific values shown in Figure 12 may vary.

For example, the 20 MHz channel in Figure 12 may be defined starting from 5.940 GHz. Specifically, the leftmost channel among the 20 MHz channels in Figure 12 may have an index of 1 (or channel index, channel number, etc.) and may be assigned a center frequency of 5.945 GHz. In other words, the center frequency of channel index N may be determined as (5.940 + 0.005*N) GHz.

Accordingly, the indices (or channel numbers) of the 20 MHz channels in Figure 12 are 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Additionally, according to the aforementioned (5.940 + 0.005*N) GHz rule, the indices of the 40 MHz channels in Figure 12 can be 3, 11, 19, 27, 35, 43, 51, 59, 67, 75, 83, 91, 99, 107, 115, 123, 131, 139, 147, 155, 163, 171, 179, 187, 195, 203, 211, 219, and 227.

Hereinafter, the structure, type and/or sub-type of the MAC frame are described.

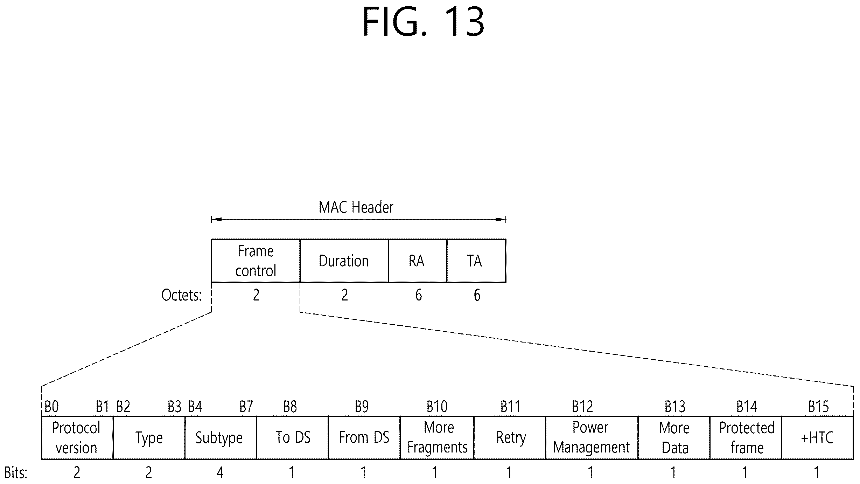

Figure 13 illustrates an example of a MAC frame header. As illustrated, the MAC frame may include a 2-octet frame control field/information, a 2-octet duration field/information, a 6-octet RA (Receiver Address) field/information, and a 6-octet TA (Transmitter Address) field/information. As illustrated in Figure 13, the four fields may be contiguous. The MAC header of Figure 13 may be modified in various ways, with new fields inserted between the four fields illustrated, or at least one of the fields illustrated may be omitted.

The MAC header illustrated in Figure 13 may be positioned at the very beginning of the MAC frame. That is, the MAC frame may include a MAC header as illustrated in Figure 13 and a MAC body field/information contiguous to the MAC header. The MAC frame including the MAC header of Figure 13 is inserted/included in the data field of the PPDU (e.g., UHR PPDU) illustrated in Figure 5.

The MAC frames included in the data field of the PPDU of the present specification can be classified into various types. For example, the MAC frames of the present specification can be classified into control frames, management frames, and data frames.

For example, the management frame includes the Association Request, Association Response, Reassociation Request, Reassociation Response, Probe Request, Probe Response, Beacon, Disassociation, Authentication, and Deauthentication frames/signals defined in conventional WLANs. For the management frame, the type fields (B3 and B2) in FIG. 13 are set to 00. Additionally, the values of the subtype fields (B7, B6, B5, B4) in Figure 13 are as follows: Association Request (0000), Association Response (0001), Reassociation Request (0010), Reassociation Response (0011), Probe Request (0100), Probe Response (0101), Beacon (1000), Disassociation (1010), Authentication (1011), Deauthentication (1100).

For example, the control frame includes the Trigger Beamforming Report Poll, NDP Announcement (NDPA), Control Frame Extension, Control Wrapper, Block Ack Request (BlockAckReq), Block Ack (BlockAck), PS-Poll, RTS, CTS, Ack, and CF-End frames/signals defined in conventional WLANs. For the control frame, the values of the type fields (B3 and B2) in Figure 13 are set to 01. Additionally, the values of the subtype fields (B7, B6, B5, B4) in FIG. 13 are as follows: Trigger (0010), Beamforming Report Poll (0100), NDP Announcement (0101), Control Frame Extension (0110), Control Wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc., as defined in conventional WLANs. For the data frame, the values of the type fields (B3 and B2) in FIG. 13 are set to 10.

The MAC frames/signals used in the present specification can be identified through the type field/information and subtype field/information described above. For example, a "trigger frame" in the present specification may refer to a MAC frame in which the type bits B3 and B2 in the frame control field of the MAC header are set to 01, while the subtype bits B7, B6, B5, and B4 in the frame control field are set to 0010. The various MAC frames described in the present specification are inserted/included in the data fields of various PPDUs (e.g., HE/VHT/HE/EHT/UHR PPDUs).

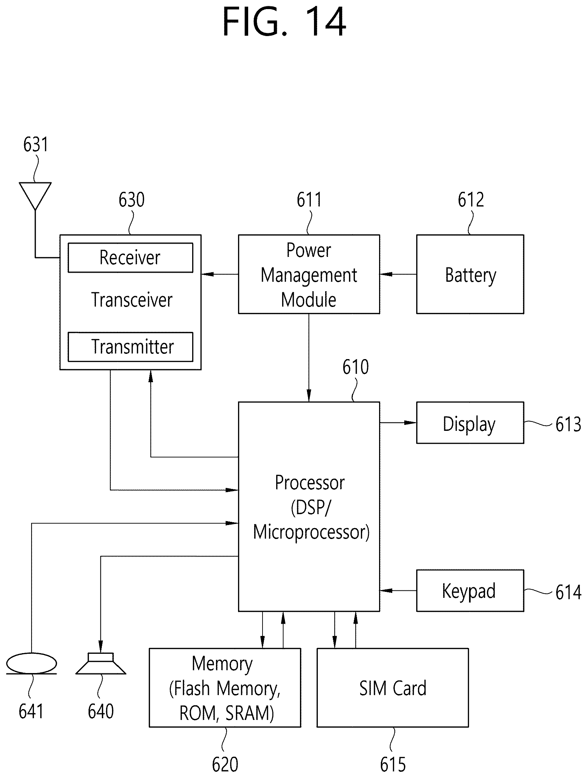

Figure 14 illustrates a modified example of a transmitting device and/or receiving device of the present specification.

The devices (e.g., AP STAs, non-AP STAs) illustrated in Figures 1 to 4 may be modified as illustrated in Figure 14. The transceiver (630) in Figure 14 may be identical to the transceivers (113, 123) in Figure 1. The transceiver (630) of FIG. 14 may include a receiver and a transmitter.

The processor (610) of FIG. 14 may be identical to the processors (111, 121) of FIG. 1. Alternatively, the processor (610) of FIG. 14 may be identical to the processing chip (114, 124) of FIG. 1.

The memory (150) of FIG. 14 may be identical to the memory (112, 122) of FIG. 1. Alternatively, the memory (150) of FIG. 14 may be a separate external memory different from the memory (112, 122) of FIG. 1.

Referring to FIG. 14, the power management module (611) manages power for the processor (610) and/or the transceiver (630). The battery (612) supplies power to the power management module (611). The display (613) outputs the results processed by the processor (610). The keypad (614) receives input to be used by the processor (610). The keypad (614) may be displayed on the display (613). The SIM card (615) may be an integrated circuit used to securely store an international mobile subscriber identity (IMSI) and associated keys, which are used to identify and authenticate subscribers in mobile devices such as mobile phones and computers.

Referring to FIG. 14, the speaker (640) may output sound-related results processed by the processor (610). The microphone (641) may receive sound-related input to be used by the processor (610).

Various technical features of the present specification may operate based on a relay station. A relay station (STA) refers to a device that receives a PPDU (e.g., the above-described HT/VHT/HE/EHT/UHR-PPDU) from a first STA (e.g., an AP STA) and relays the received PPDU to a second STA (e.g., a non-AP STA). The relay function/operation/procedure/transmission performed by the relay STA in the present specification may be implemented in various ways. For example, the relay STA may receive a first PPDU from the first STA and decode a portion of the received first PPDU. For example, the relay STA can decode the PHY preamble (e.g., L-SIG, U-SIG, EHT-SIG, etc.) included in the first PPDU, and decode a part of the MAC frame (e.g., MAC header) included in the data field of the first PPDU. Through this, the relay STA can obtain the frame body of the MAC frame of the first PPDU, and can relay the frame body of the MAC frame to the second STA without performing additional decoding on the frame body of the obtained MAC frame. That is, the relay STA can encode/generate/configure the second PPDU based on the body of the MAC frame, and transmit the second PPDU to the second STA. As a result, the first PPDU and the second PPDU can include the same payload or MAC frame body. For example, the PHY preamble and/or MAC header of the first PPDU received by the Relay STA may be identical to or different from the PHY preamble and/or MAC header of the second PPDU transmitted by the Relay STA. For example, the Relay STA may not decode the remaining MAC frame (i.e., frame body) except for the MAC header of the first PPDU, or may decode only a part of it.

The Relay STA in the present specification can be implemented in various ways.

First, the Relay STA of the present specification can be implemented by including a Relay-STA and a Relay-AP. Specifically, the Relay STA can include both a Relay STA that communicates with a Root AP and a Relay AP that communicates with a non-AP. In this case, an upper BSS can be defined between the Root AP and the Relay STA, and a lower BSS can be defined between the Relay AP and the non-AP. A relay function can be implemented within the Relay STA between the Relay STA and the Relay AP.

Second, the Relay STA of the present specification may be a terminal/device that operates as a non-AP STA (i.e., a user STA). That is, the Relay STA of the present specification may belong to a BSS defined/configured by an AP STA without defining/configuring a new lower BSS by itself. The AP STA may assign an ID (e.g., AID) to the Relay STA in the same way as a conventional non-AP STA (i.e., a user STA). That is, the Relay STA may be identified like a typical non-AP STA (i.e., a user STA) and may additionally support the above-described relay function/operation/procedure/transmission. That is, the Relay STA may receive a first DL PPDU from an AP-STA, obtain a MAC frame body of the first DL PPDU, and relay a second DL PPDU including the obtained MAC frame body to a neighbor non-AP STA. Additionally, the relay STA can receive a first UL PPDU from a neighbor non-AP STA, obtain a MAC frame body of the first UL PPDU, and relay a second UL PPDU including the obtained MAC frame body to the AP STA.

Third, the Relay STA of the present specification can be implemented based on multiple links. For example, the relay function/operation/procedure described above can be performed based on multiple links described in FIG. 4 of the present specification. That is, a specific non-AP MLD can operate as a Relay STA, and in this case, the first PPDU can be received through the first link included in the non-AP MLD. The Relay STA can relay the first PPDU received through the first link to another STA through the second link. For example, the first link can operate as a DL link (or UL link), and the second link can operate as a UL link (or DL link).

As described above, the present specification is based on the IEEE 802.11bn, or UHR (ultra-high reliability) standard, which improves upon IEEE 802.11be. The specific details are as follows.

Next Wi-Fi (beyond 11be) aims to support ultra-high reliability when transmitting signals to a STA. To this end, various technologies are being considered to support high throughput, low latency, and extended range. To ensure reliable transmission and extend Wi-Fi coverage/range for various IoT devices as well as outdoor environments, APs can use relay operation to transmit signals to and receive signals from STAs. That is, signals are transmitted and received between relay STAs and non-AP STAs through relay operation. In this way, for signal transmission and reception between relay STAs and non-AP STA(s), the AP detects non-AP STA(s) located around the relay STA and determines whether to perform relay transmission. The present specification defines a method for an AP to detect non-AP STA(s) located around the relay STA for signal transmission and reception through relaying.

In next-generation wireless LAN systems (e.g., UHR systems based on IEEE 802.11bn), the use of the above-described Relay STA is being considered for stable signal transmission (i.e., reliable signal transmission) regardless of the location of the STA within the BSS, and for increasing coverage for signal transmission and eliminating holes where signals cannot reach.

As described above, a relay STA performs various functions, operations, and procedures and can be implemented in various ways. To facilitate implementation and reduce operational complexity, the present specification considers a relay STA controlled by an AP. However, the relay STA and related operations described herein are not limited to AP-controlled relay transmission and can be applied to all relay transmission and reception.

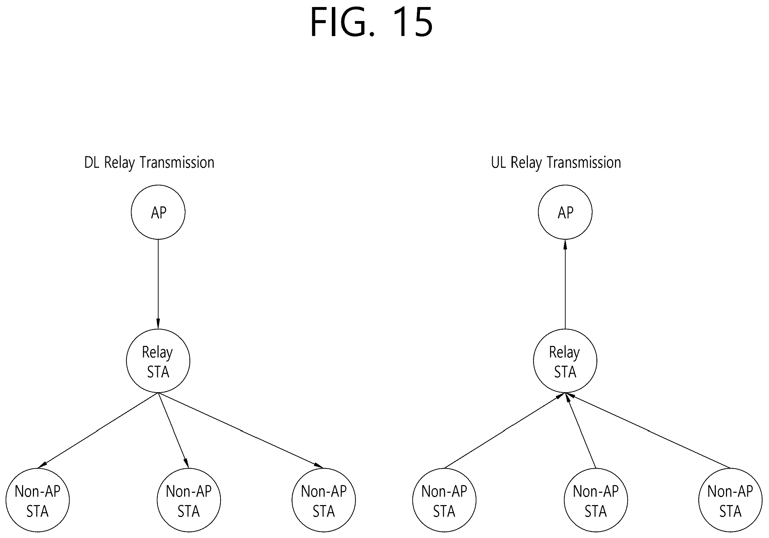

FIG. 15 describes the characteristics of a Relay STA controlled by an AP.

As illustrated, an example of a Relay STA may be an AP-controlled Relay STA (ACRS). The ACRS performs relay transmission for data received from an AP within a BSS, and the AP controls the ACRS for relaying. That is, the ACRS may transmit a signal received from the AP to an end-user/STA based on control information received from the AP, or a relay STA may receive signals from multiple non-AP STAs and transmit the signals to the AP.

The above ACRS can operate as an independent relay device that only performs relay transmission or as a non-AP STA that supports relaying.

Below, the information exchanged within the BSS through the Management frame, etc. in the present specification is described in more detail.

Hereinafter, various procedures for negotiating control information related to the operation of a Relay STA are described. The relay operation/function/procedure performed by the Relay STA in this specification may be referred to as Relay operation. This expression Relay operation may be changed to various names such as Relay function/procedure/transmission. Meanwhile, various control information/variables related to the Relay operation (e.g., parameters/control bits related to bandwidth, stream, MSC, etc.) may be referred to as relay operation parameter(s). These relay operation parameters may be changed to various names such as relay (control) information/bit/signal.

In order to indicate that a relay operation that transmits and receives signals through a Relay STA as described above is performed within a BSS, an AP STA may use a management frame (e.g., a beacon frame and/or a probe response frame). Specifically, the AP STA may indicate to STAs within the BSS information related to whether the relay operation is supported/performed/activated based on the management frame (e.g., a beacon frame and/or a probe response frame). Specifically, the AP may transmit specific control information/fields/signals (e.g., Relay operation and/or Relay operation support information/fields) included within a management frame (e.g., a beacon frame). The Relay operation information/fields may be expressed in various terms. For example, in addition to the Relay operation information/fields, terms such as Relay operation parameter(s), Relay operation support parameter(s), Relay operation element(s), and Relay operation support element(s) may be used.

For example, the above relay operation information/field is defined using order 92 or a reserved value in the beacon frame body. For example, the existing beacon frame body includes information corresponding to orders 1 to 91. For example, the information corresponding to the existing order 1 is timestamp information, and the information corresponding to order 2 is Beacon Interval information. For example, the above relay operation information/field may be included in a position consecutive to the information corresponding to order 91 (e.g., WUR discovery information).

For example, if the AP supports relay operation, various management frames (e.g., (Re)Association Request/Response frame format, Probe Request/Response frame format, (De)Authentication frame format) exchanged between the AP and non-AP STA may include information related to the relay operation described above.

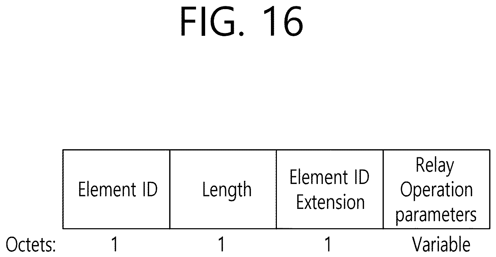

FIG. 16 is an example of a management frame that includes information related to relay operation. According to the example of FIG. 16, various management frames (e.g., (Re)Association Request/Response frame format, Probe Request/Response frame format, (De)Authentication frame format) may include information related to the above-described relay operation.

The above relay operation parameter may include various information related to the above-described relay operation. For example, the above relay operation parameter may include information related to a bandwidth (BW) for relay transmission, information related to the direction of relay transmission (e.g., DL/UL), information related to the number of streams used for relay transmission (e.g., Max Nss), MCS information used for relay transmission, information related to the number of STAs (e.g., non-AP STAs/MLDs) used for relay transmission, and/or information related to whether beamforming is supported for relay transmission (e.g., beamformed information).

A Relay STA and non-AP STA performing relay transmission can indicate whether they support relay transmission and reception using capabilities element(s) (or capability element(s)). The capabilities element(s) can be included in various management frames (e.g., (Re)Association Request/Response frame format, Probe Request/Response frame format, (De)Authentication frame format). The capabilities element(s) can be included in the management frame of FIG. 16 or in a separate management frame.

At this time, the detailed structure of the capability element(s) (or capabilities element(s)) can be defined in various ways. For example, the capability element(s) can include a relay subfield and a relay support field. The relay subfield can be used as an indication of whether (an STA transmitting the corresponding subfield) can operate as a relay STA. The relay support subfield indicates support for signal transmission and reception through the relay STA, i.e., relaying. Each of the two subfields can be composed of 1 bit. For example, a specific relay STA sets the relay subfield to 1 to indicate that it is a relay STA. In addition, since the relay STA participates in relaying to transmit and receive signals, the relay support subfield is also set to 1. On the other hand, a non-AP STA that transmits and receives signals through relaying does not operate as a relay STA, and thus the relay subfield can be set to 0. However, since the above non-AP STA supports signal transmission and reception through relaying, the relay support subfield is set to 1.

Accordingly, only relay STAs and non-AP STAs in which the relay support subfield is set to 1 within the capability element(s) (or capabilities element(s)) can perform relay transmission and reception within the BSS.

The above capability element(s) can be modified in various ways.

For example, the capability element(s) including the relay subfield and the relay support subfield may be included in an element related to HE/EHT/UHR/Next-WIFI. In addition, the capability element(s) including the relay subfield and the relay support subfield may be determined based on whether the non-AP STA performing the relay operation is HE/EHT/UHR/Next-WIFI.

As described above, through the capability element(s), the relay STA can be defined as an independent STA that performs relaying operation/procedure/function/transmission, or a non-AP STA with relay STA capability.

Below, the detection/discovery/searching performed for non-AP is described in more detail.

The above relay STA can be defined as a non-AP STA, and unlike the AP, the location of the relay STA is not fixed and can change. In addition, the mobility of the non-AP STA can be considered. In this way, the non-AP STA located around the relay STA can change, and even if the signal reception status from the AP is poor, it may not be located around the relay STA. Accordingly, in order to efficiently transmit and receive signals through relay operation, detection of non-AP STAs located around the relay STA and selection of non-AP STAs performing the relay operation may be required.

The Relay STA of the present specification performs a detection operation/procedure/function/transmission for at least one non-AP STA. The detection may be replaced with various terms such as discovery and searching. Through the detection/discovery/searching, the Relay STA may obtain various information about at least one non-AP. The at least one non-AP STA may be a non-AP STA located near the Relay STA. For example, through the detection/discovery/searching-operation/procedure/function/transmission, the Relay STA may perform blind detection for at least one non-AP located nearby, and the blind detection may be performed in a manner in which the Relay STA overhears a PPDU received from the at least one non-AP STA. For example, the relay STA may perform detection based on a STA ID included in a MAC frame or a MAC header of the PPDU received from the at least one non-AP, rather than a signal field of a physical layer of the PPDU. This blind detection may be performed by the relay STA when an indication related to the blind detection is included in a management frame transmitted from the AP to the relay STA during an association process and the relay STA does not receive a detection request frame, such as a trigger frame, from the AP. For example, through this blind detection, the relay STA may obtain information related to at least one non-AP STA located nearby (e.g., ID/AID/MAC-ID information, RSSI/SNR/SINR information received from the non-AP).

As described above, a relay STA can perform detection/discovery/searching on at least one neighbor non-AP STA through a relay operation. For example, the detection/discovery/searching can be performed periodically. Information about the periodicity of the detection/discovery/searching can be transmitted from the BSS through a management frame (e.g., a beacon frame and/or a probe response frame). In other words, an AP-STA can transmit a management frame (e.g., a beacon frame and/or a probe response frame) including the following information to the relay-STA and/or the non-AP STA.

Information (e.g., Information_1 to Information_3) that may be included in the above management frame (e.g., beacon frame and/or probe response frame) may be at least one of the following information.

### Information_1: Information related to detection/discovery for relay operation support

The above Information_1 may be information related to whether detection/discovery/searching is performed for a non-AP STA for relay operation.

### Information_2: Period of detection/discovery

The above Information_2 may be information related to the cycle in which detection/discovery/searching is performed for a non-AP STA. The information related to the cycle may be information related to the periodicity of detection/discovery/searching or the interval in which detection/discovery is performed.

### Information_3: max number of STA

The above Information_3 may be information related to the maximum number of non-AP STAs (or non-AP MLDs) on which detection/discovery/searching can be performed.

Below, we describe specific detection/discovery/searching processes. As described below, detection/discovery/searching is performed on non-AP STA(s) located around the Relay STA. It is preferable to perform the following detection/discovery/searching processes before the Relay STA performs relay operations.

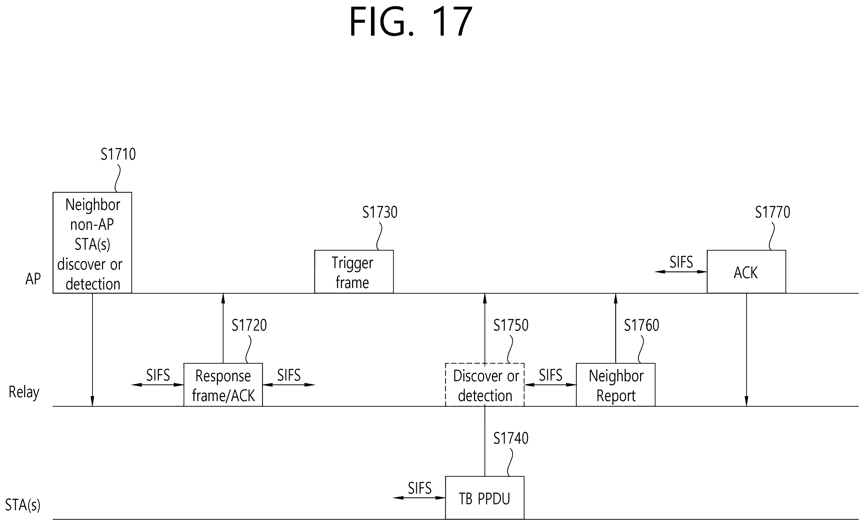

FIG. 17 is a diagram illustrating an example of the search/discovery process performed in the present specification.

Step S1710 of Figure 17 is described below.

Step S1710 of FIG. 17 relates to (neighbor) detection/discovery performed by a relay STA at the request of an AP. The technical features related to step S1710 of FIG. 17 may be based on Technical Feature 1 and its detailed examples described below.

Technical Feature 1. The AP may transmit a frame (i.e., a request frame) to the relay STA requesting detection/discovery/searching of non-AP STA(s) for relay operation.

Technical Feature 1.A. The AP may transmit information related to non-AP STA(s) that will perform the configured relay operation through the request frame to the relay STA. For example, the AP may specify/configure non-AP STA(s) that will perform the configured relay operation based on the relay-supporting non-AP STA identified through association or probing and the SNR/SINR/RSSI of the non-AP STA. Information about the specified/configured non-AP STA(s) may be included in the request frame.

Technical Feature 1.A.i. The above-mentioned specific/configured non-AP STA may be a non-AP STA(s) that has poor reception status from the AP.

Technical Feature 1.A.ii. As described above, since the AP determines the non-AP STA(s) to perform relay operations, unnecessary searching and detection of non-AP STA(s) can be reduced. That is, since the AP specifies/configures the non-AP STA(s) to be detected/discovered/searched, unnecessary searching and detection of non-AP STA(s) can be reduced.

Technical Feature 1.B. The request (or various names such as polling frame, etc.) transmitted by the AP to the relay STA may be configured to include the following information. That is, the frame/signal transmitted through S1710 of FIG. 17 may include at least one of the following pieces of information.

### Technical Feature 1. Information Related to Bandwidth (BW)

Technical Feature 1.B.i.1. The bandwidth information may be BW information used for signal transmission and reception. This information indicates the BW used (by the Relay STA) when detecting/discovering/searching non-AP STAs.

### Technical Feature 1.B.ii. Information Related to the Number of Non-AP STAs to Discover/Detect

Technical Feature 1.B.ii.1. The above information includes information related to the number of non-AP STA(s) (or the number of non-AP MLDs) that the AP wishes to discover for relay operation.

### Technical Feature 1.B.iii. STA List Information

Technical Feature 1.B.iii.1. The STA list information may include information related to one or more non-AP STAs. The information may be composed of user fields for multiple non-AP STAs, and each user field may include the following information. That is, the number of user fields may be equal to the number of non-AP STAs, and each user field may include various information about a corresponding non-AP STA (e.g., STA-ID, RU allocation, encoding, and/or MCS, as described below).

Technical Feature 1.B.iii.1.A. The STA list information may include STA ID/AID information of non-AP STA(s) that the AP wishes to detect/discover.

Technical Feature 1.B.iii.1.A.i. The STA ID/AID information may be a 12-bit or 48-bit MAC address. For example, it may be 12 bits (e.g., 12 LSBs or 12 MSBs) of the AID value of the non-AP(s) or a 48-bit MAC address.

Technical Feature 1.B.iii.1.B. The STA list information may include information related to RU allocation.

Technical Feature 1.B.iii.1.B.i. Information related to the resource through which the non-AP STA transmits the PPDU may be composed of, for example, 8 bits (or 9 bits, etc.).

Technical Feature 1.B.iii.1.B.i.1. Through the RU allocation information, a relay STA can detect/discover/search for a non-AP STA using signaling transmitted through the corresponding RU.

Technical Feature 1.B.iii.1.B.i.2. Through the information related to the above RU allocation, a non-AP STA can transmit a signal using the PPDU format of TB/SU/NDP.

The above Technical Features can be expressed differently as follows. The RU allocation can be transmitted to the relay STA through step S1710 of FIG. 17. Thereafter, the RU allocation can be transmitted to non-AP STA(s) through, for example, step S1730, and as a result, the non-AP STA(s) can generate TB-PPDU, SU-PPDU, NDP, etc. based on the RU allocation and transmit them from the AP. In the example of FIG. 17, the TB-PPDU is transmitted to the AP through step S1740. The radio resources of the TB-PPDU, SU-PPDU, and NDP generated by the non-AP STA(s) can be determined based on the RU allocation.

Technical Feature 1.B.iii.1.C. The STA list information may include information related to encoding.

Technical Feature 1.B.iii.1.C.i. The information related to encoding may indicate either BCC (Binary Convolutional Coding) or LDPC (Low Density Parity Check Coding).

Technical Feature 1.B.iii.1.C.ii. The above encoding-related information may be omitted if the PPDU transmitted by a non-AP STA does not include a data field.

Technical Feature 1.B.iii.1.D. The STA list information may include MCS-related information.

Technical Feature 1.B.iii.1.D.i. The MCS-related information indicates information related to the MCS used by the non-AP STA when transmitting signals.

Technical Feature 1.B.iii.1.D.ii. The encoding-related information and/or the MCS-related information may be omitted if the non-AP STA(s) consistently uses the BCC and MCS0 techniques.

Technical Feature 1.B.iii.1.D.iii. In addition, the information related to the above MCS may be omitted if the PPDU transmitted by the non-AP STA(s) is configured in a way that does not include a data field.

The above technical features can be expressed differently as follows. Information related to the Encoding and/or MCS can be transmitted to the relay STA through step S1710 of FIG. 17. Thereafter, the information related to the Encoding and/or MCS can be transmitted to non-AP STA(s) through, for example, step S1730, and consequently, the non-AP STA(s) can generate TB-PPDU, SU-PPDU, NDP, etc. based on the information related to the Encoding and transmit them to the AP. In the example of FIG. 17, the TB-PPDU is transmitted to the AP through step S1740. The encoding and/or MCS technique of the TB-PPDU, SU-PPDU, NDP generated by the non-AP STA(s) can be determined based on the information related to the Encoding and/or MCS.

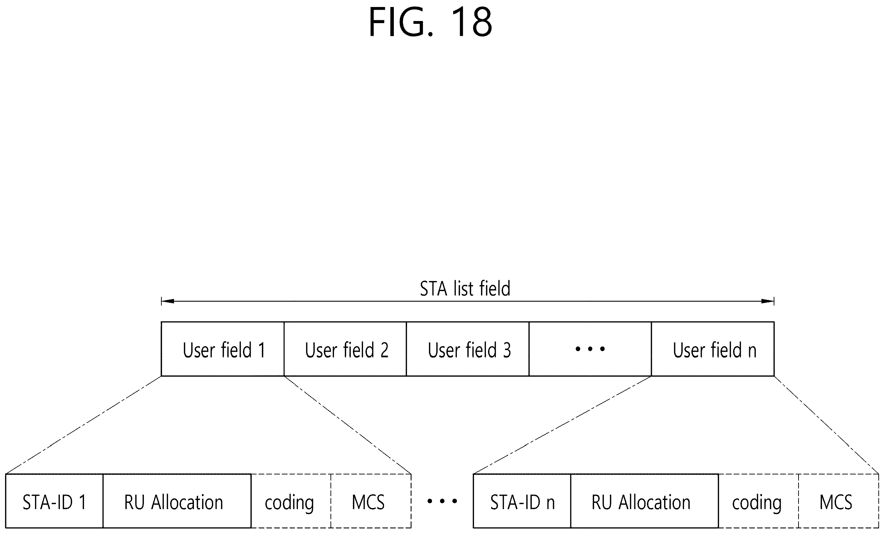

Fig. 18 is an example of the STA list field presented in this specification.

Technical Feature 2. The STA list field may be as shown in FIG. 18. That is, the STA list information described above may be configured based on the STA list field, which may be defined as an example of FIG. 18. The information such as the STA-ID, RU allocation, encoding, and MCS described above may be configured according to the arrangement of FIG. 18, and information regarding encoding/MCS, etc. may be omitted as described above.

A relay STA that receives a neighbor detection request frame transmitted by the AP (e.g., a frame transmitted through step S1710 of FIG. 17) can obtain information about non-AP STA(s) that must be detected/discovered through the received information.

Technical Feature 3. The Relay STA, having received the request frame configured as described above from the AP, transmits a response frame to the AP after SIFS. An example of such a response frame may be the Response frame/ack illustrated in step S1720 of FIG. 17.

Technical Feature 3.A. The response frame transmitted by the Relay STA (e.g., the Response frame/ack shown in step S1720 of FIG. 17) may include a status code.

Technical Feature 3.B. As another example, the response frame (the Response frame/ack shown in step S1720 of FIG. 17) may be replaced with an ack frame.

The following technical features may be related to step S1730 of FIG. 17.

Technical Feature 4. An AP that transmits a frame requesting neighborhood non-AP STA discovery/detection to a relay STA (e.g., a frame of step S1710) may, after receiving a response frame (e.g., a frame of step S1720) from the relay STA, solicit TB (trigger-based) PPDU transmission by transmitting a Trigger frame (e.g., a frame of step S1730) to the non-AP STA(s) related to the previously transmitted request frame (e.g., a frame of step S1710).

Technical Feature 4.A. The Trigger frame is transmitted SIFS after the AP receives a response frame from the relay STA. That is, as in step S1730 of FIG. 17, the AP can transmit the Trigger frame immediately after step S1720 without performing separate contention (e.g., without decreasing the back-off counter according to the channel status). That is, after the frame of step S1720 is received, the Trigger frame can be transmitted by the AP immediately after the SIFS time has elapsed.

The Trigger frame illustrated in S1730 may be transmitted to non-AP STA(s). For example, an intended recipient of the Trigger frame is a non-AP STA(s), and the relay STA may not be the intended recipient of the Trigger frame. For example, if the relay STA cannot overhear the frame of step S1730, the relay STA may perform blind detection by decoding a STA ID in a MAC header or a MAC frame included in the frame of step S1740, and generate report information based on the blind detection. Resource information (e.g., RU allocation information, encoding information, and/or MCS information, etc.) allocated to non-AP STA(s) may be obtained through the information transmitted through step S1710.

The following technical features may be related to step S1740 of FIG. 17.

Technical Feature 4.B. PPDU(s) transmitted by non-AP STA(s) can be used for discovery/detection. Accordingly, the encoding and/or MCS included in the user field of a trigger frame (e.g., frame S1730) may be fixed. That is, a TB PPDU (e.g., frame S1740) may be generated according to a fixed encoding and/or MCS technique. For example, the frame of S1730 may not be a Trigger frame but a Downlink Frame, and the frame of S1740 may be an ACK frame for the Downlink Frame. For example, the frame of S1730 may not be a Trigger frame but an RTS frame or an MU-RTS frame, and the frame of S1740 may be a CTS-to-self frame corresponding to the RTS frame or the MU-RTS frame. As previously described, examples of fixed encoding and/or MCS techniques may be conventional BCC and MCS0 (e.g., an MCS index with BPSK constellation mapping and a 1/2 code rate).

Technical Feature 4. B.i. The PPDU (e.g., frame of S1740) transmitted by the non-AP STA(s) for detection/discovery may be a TB or SU/MU PPDU and may be configured in an EHT PPDU format or an UHR PPDU format. That is, the PPDU (e.g., frame of S1740) transmitted by the non-AP STA(s) for detection/discovery may include the characteristics of the PPDU illustrated in FIG. 5.

Technical Feature 4.C. The above-described technical features can be modified in various ways. That is, the PPDU (e.g., frame of S1740) transmitted by the non-AP STA(s) for detection/discovery may not include a Data field.

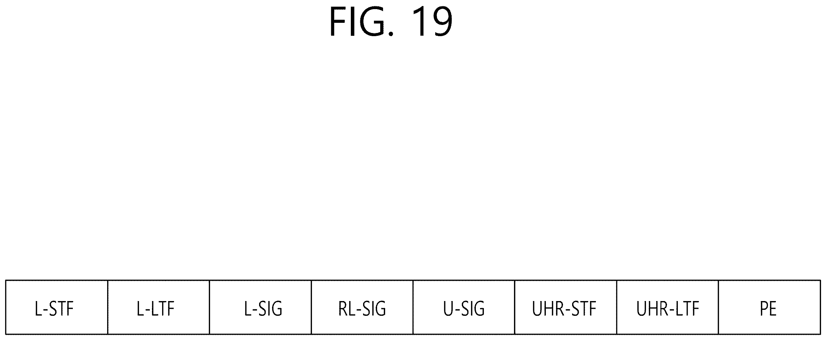

FIG. 19 illustrates an example of a PPDU transmitted for detection/discovery. As illustrated in FIG. 19, a PPDU for detection/discovery can be constructed based on a PPDU that does not include a Data field (e.g., a TB PPDU with Num_sym set to 0).

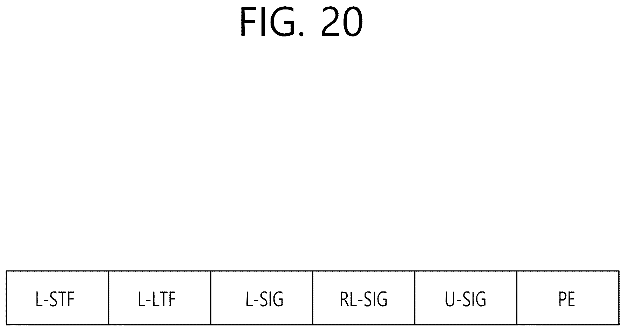

FIG. 20 illustrates another example of a PPDU transmitted for detection/discovery. As in the example in FIG .20, a PPDU that does not include the UHR STF or UHR-LTF can be used as a PPDU for detection/discovery.

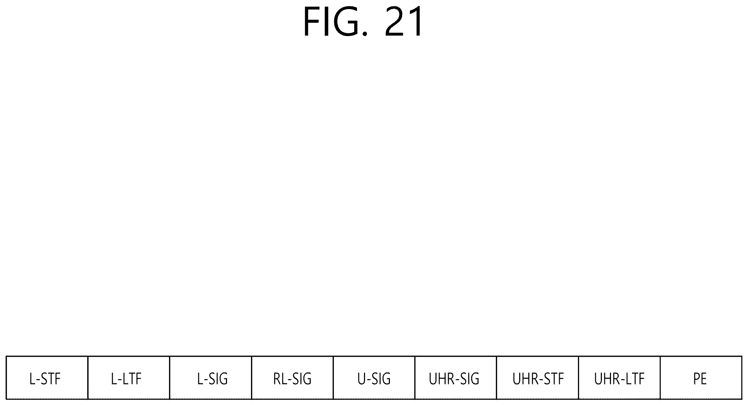

FIG. 21 illustrates another example of a PPDU transmitted for detection/discovery. For example, as in the example in FIG. 21, it is possible to use an MU PPDU. In this case, the MU PPDU can be configured for SU transmission.

In the example of FIG. 21, the illustrated U-SIG field may be related to a conventional PPDU, and the conventional PPDU may not include a user field related to ID information of a non-AP STA transmitting the PPDU and may not include an AID related to the device.

In the example of FIG. 21, the UHR-STF and/or UHR-LTF may be omitted.

In the example of Figures 19/20/21, the PE (packet extension) field may be absent, or if present, may be configured as 4/8/16 us for receiver processing.

Technical Feature 4.D. Among the non-AP STA(s) that have received the trigger frame (e.g., the frame of step S1730), a non-AP STA that does not wish to perform a relay operation may not transmit a PPDU corresponding to the trigger frame.

The following Technical Features may be related to step S1750 of FIG. 17.

Technical feature 5. For example, the relay STA can detect/discover the non-AP STA's STA ID included in the MAC frame or MAC header of the PPDU transmitted from each non-AP STA(s) in response to the AP's trigger frame, downlink frame, or RTS frame, . At this time, the relay STA measures the RSSI (Received Signal Strength Indicator)/SNR (Signal to Noise Ratio)/SINR (Signal to Interference plus Noise Ratio) for the signal (i.e., PPDU) received from each non-AP STA(s).

Technical Feature 5.A. For example, a relay STA can obtain information related to an RU that a non-AP STA transmits a signal through a Trigger frame, downlink frame, or RTS frame transmitted by an AP. In this case, a relay STA can obtain information about resources (e.g., RU, MCS, encoding applied to S1740) of a PPDU transmitted by a non-AP STA based on the frame of step S1730 and/or the frame of step S1710.

The following Technical Features may be related to step S1760 of FIG. 17.

Technical Feature 6. The relay STA that performs measurement of a PPDU from a non-AP STA solicited by a trigger frame, downlink frame, or RTS frame may transmit a report/feedback frame (e.g., a frame from step S1760) to the AP.

Technical Feature 6.A. For example, the report frame (e.g., the frame of step S1760) may be transmitted SIFS after the relay STA receives the PPDU transmitted by the non-AP STA, or may be transmitted at a time instructed by the AP to the relay STA through a request frame. For example, the IFS (interframe space) between the frame of step S1750 and the frame of step S1760 may be set based on the Short IFS (SIFS), or the AP may transmit a request frame to the relay STA between steps S1750 and S1760, and the report frame may be transmitted to the AP as a response to the request frame.

Technical Feature 6.B. The report frame transmitted by the relay STA (e.g., the frame in step S1760) may be configured to include, for example, a neighbor non-AP STA information field or a neighbor non-AP STA report element. In this case, the above-described field/element may include at least one of the following multiple fields.

### Technical Feature 6.B.i. Number of Non-AP STAs Information/Field

Technical Feature 6.B.i.1. The above information/field indicates the number of non-AP STAs (or non-AP MLDs) identified by the relay STA through measurement (e.g., through step S1750) and/or the number of non-AP STAs (or non-AP MLDs) reported through step S1760, etc.

### Technical Feature 6.B.ii. User Field Information/Field

The above User Field information/field consists of information related to non-AP STAs measured by the relay STA (e.g., through step S1750) and may be configured as individual user fields for each STA.

Technical Feature 6.B.ii.1. The User field information/field may include a Non-AP STA ID. The Non-AP STA ID may be identification information for the measured non-AP STA.

Technical Feature 6.B.ii.1.A. The Non-AP STA ID may be implemented in various ways. For example, it may be a 12-bit STA ID (i.e., AID) or a 48-bit MAC address.

Technical Feature 6.B.ii.2. The User field information/field may include information related to link quality. Examples of the link quality information may include RSSI, SNR, and SINR.

Technical Feature 6.B.ii.2.A. The information related to the above Link quality may be information related to the channel status between the non-AP STA and the relay STA or the received signal measured through the received PPDU (e.g., PPDU of S1740).

Technical Feature 6.B.ii.3. The report frame transmitted by the relay STA (e.g., the frame of step S1760) may be composed of various types of user fields and/or user information fields. For example, the report frame may have a structure sequentially including user field 1 including report information for a first non-AP STA, user field 2 including report information for a second non-AP STA, ..., user field N including report information for an Nth non-AP STA. Alternatively, the report frame may be composed of a user information field described below. The user information field may be composed of a user list field and a link/channel quality list field for the user list field.

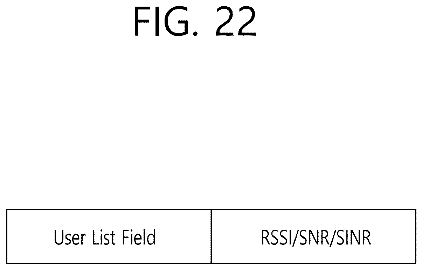

FIG.22 is an example of a user information field.

Technical Feature 6.B.ii.3.A. The user information field included in the report frame of the present specification (e.g., the frame of step S1760) may follow the example of FIG. 22. That is, as illustrated, the report frame may include a user list field and a link/channel quality list field (indicated as RSSI/SNR/SINR in the drawing) that follows it.

Technical Feature 6.B.ii.3.B. The user list field illustrated in FIG. 22 may be configured with AID information of the measured non-AP STA (e.g., 12 LSBs/MSBs of the AID). In addition, the link/channel quality list field may be configured with RSSI/SNR/SINR values corresponding to the AID of the user list field.

Technical Feature 6.C. The BW of the report frame transmitted by the relay STA (e.g., the frame of step S1760) may be the same as the BW included in the frame transmitted by the AP to the relay STA for detection (e.g., the BW value indicated by step S1710).

Technical Feature 6.D. As another example, considering the processing (time/delay) of a relay STA, which is a non-AP STA, a measurement report such as step S1760 may not be transmitted immediately. In this case, the AP may perform report triggering, and the relay STA may perform a measurement report such as step S1760 after receiving the report triggering.

Technical Feature 6. D.i. After measurement such as step S1750 is performed, Triggering of AP for reporting may occur, followed by report from relay STA.

Technical Feature 7. The series of procedures described above can be performed based on FIG. 17. However, the procedures of FIG. 17 can be modified in various ways. As described above, step S1760 is not forced to be performed immediately after step S1750 is performed, at an interval of SIFS. In addition, an ACK procedure such as step S1770 as illustrated can also be omitted. In addition, steps S1710 to S1760 as illustrated can also be modified in various ways. That is, steps S1710 to S1760 can all be modified/omitted in various ways.

Various modifications of the above mentioned Technical Feature 1 to Technical Feature 6 described above and/or FIG. 17 are described below.

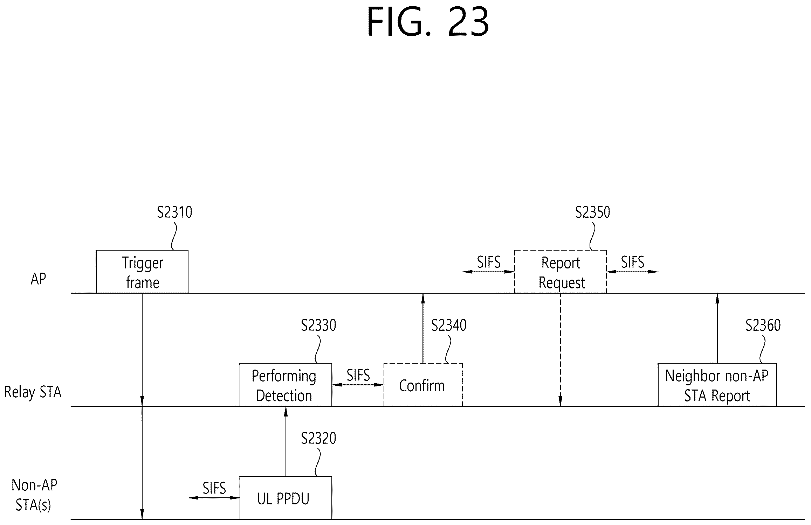

FIG. 23 is a diagram illustrating an example of the search/discovery process performed in the present specification. The example in FIG. 23 modifies steps S1710 and S1720 of FIG. 17.

To perform relay operations, the AP transmits a trigger frame to non-AP STA(s) and relay STA(s) to perform detection/discovery/searching/selection of suitable non-AP STA(s). This transmission of the trigger frame may correspond to step S2310 of FIG. 23.

The trigger frame transmitted by the AP may include at least one of the following information fields:

### Information Field 1: Non-AP STA user fields

The above information field may consist of user fields for non-AP STAs that the AP wants to detect/discover/search/select, and each user field may include various combinations of the following information.

First information: This information may be AID information. This information may be ID information of a non-AP STA.

Second information: This information may be RU allocation information. This information may be information related to the RU allocated for the non-AP STA to transmit a signal.

Third information: This information may be information related to the direction of communication, such as TX/RX. This information may indicate whether the relay STA and/or non-AP STA(s) receiving the trigger frame operate in the TX direction or the RX direction.

That is, the above information may be indication information related to the operational role, such as whether the AP operates as a transmitter or receiver.

For detection/discovery/searching/selection of non-AP STAs, the trigger frame transmitted by the AP can be defined as a new trigger frame variant, as follows:

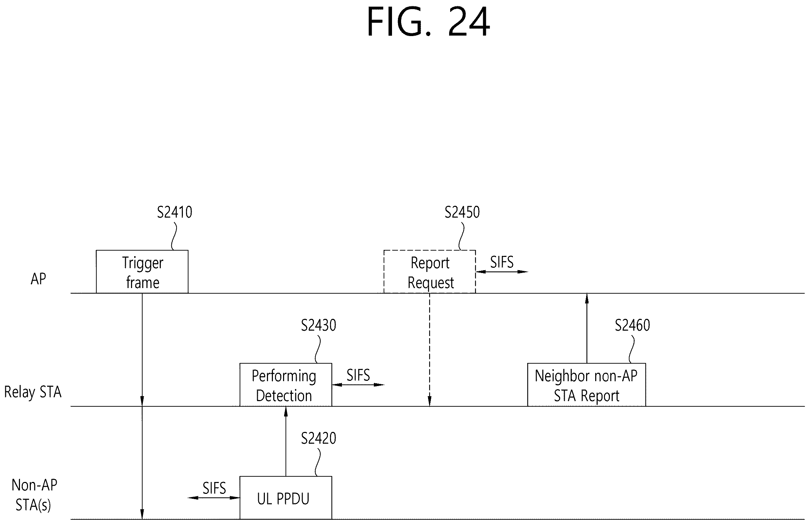

For example, the trigger frame used in FIGS. 23/24 may include a MAC header (Frame control field, Duration field, RA field, TA field) and a common info field consecutive to the MAC header. The common info field may include B0 to B63 bits. The B0 to B4 bits (i.e., 4-bit information) of the common info field may be a trigger type subfield with a length of 4 bits. Various variants of the trigger frame may be defined through the value of the trigger type subfield. The trigger frame used in FIGS. 23/24, etc. may be a new trigger frame variant.

Accordingly, using the value of the trigger type subfield described above, a relay operation trigger frame (i.e., a new trigger frame used for relay operations such as those described herein) can be newly defined. That is, the trigger frame illustrated in Figures 23 and 24 can be referred to as a relay trigger type.

To identify the relay trigger type described above, the value of the trigger type subfield (bits B0 to B4 of the common info field) can be set to any value between 8 and 15.

Additionally or alternatively, a trigger frame for relay operations can be defined using the format of the EHT variant common info field. In this case, the common info field can include an indication/information bit for the relay operation.

For example, an indication/information bit for a relay operation can be indicated using at least one bit among B22, B26, B53, and B63. That is, as described above, the common info field includes bits B0 to B63, and a trigger frame for a relay operation can be indicated through any one bit among bits B22, B26, B53, and B63.

Additionally or alternatively, the trigger frame type used in the relay operation can be indicated through a special user info field. In other words, a special user info field consecutive to the common info field can be used to indicate a trigger frame for the above-described relay operation. The Special User Info field is a field defined in the trigger frame of the conventional WIFI standard, and is a field that does not convey user specific information in the trigger frame and conveys extended common information not provided by the common info field in the trigger frame. The Special User Info field includes bits B0 to B39, and bits B0 to B12 (i.e., a 12-bit long subfield) in the Special User Info field are configured as AID12 information. In addition, bits B12 to B14 (i.e., a 3-bit long subfield) in the Special User Info field are configured as a PHY Version Identifier.

The PHY Version Identifier of the special user info field including information related to the relay trigger type for the above relay operation is set to a non-zero value. In other words, in order to indicate a trigger frame for the above-described relay operation, bits B12 to B14 (i.e., a 3-bit long subfield) within the Special User Info field may have a non-zero value.

In this case, the PHY Version Identifier may be set to 1. That is, in order to indicate a trigger frame for the relay operation described above, bits B12 to B14 (i.e., a subfield of 3 bits in length) within the Special User Info field may have a value of 1.

Additionally or alternatively, information related to the trigger frame type used in the relay operation may be indicated using some or all of the information bits B37 to B39 of the special user info field. In other words, in order to indicate the trigger frame for the above-described relay operation, the values of bits 1/2/3 of bits B37 to B39 in the Special User Info field may have preset values.

The following technical features may correspond to step S2320 of FIG. 23.

A non-AP STA that receives a frame transmitted by the AP (e.g., the Trigger frame of step S2310) transmits a UL PPDU to the relay STA based on information related to BW/RU, etc. allocated by the trigger frame, if its AID matches the AID included in the user field of the trigger frame.

The UL PPDU transmitted by step S2320 may be configured in various ways. For example, a PPDU that does not include a data field, such as the examples of Figures. 19, 20, and/or 21, may be transmitted by step S2320. Additionally or alternatively, the PPDU of step S2320 may be an NDP format in which the data field is excluded from a VHT/HE/EHT/UHR PPDU, or may be configured as a HE/EHT/UHR TB NDP. The intended recipient of the PPDU of step S2320 may be only an AP STA, only a Relay STA, or both the AP STA and the Relay STA.

The following technical features may correspond to step S2330 of FIG. 23.

A relay STA that receives a frame (e.g., a Trigger frame of step S2310) from the AP as described above receives a signal (e.g., a PPDU of step S2320) based on information related to the RU/BW allocated by the frame. Using the received signal, the relay STA can identify/obtain information about the non-AP STA(s) that transmitted the signal (e.g., ID information of the non-AP STA(s)). Furthermore, the relay STA can measure the quality (e.g., SNR/SINR/RSSI) of the link between the non-AP STA and the relay STA based on the received signal.

The following technical features may correspond to step S2340 of FIG. 23.

The relay STA may transmit a confirm signal/Ack to the AP to notify that it has received a signal (e.g., a PPDU of step S2320) from a non-AP STA(s). The confirm signal may be implemented in the form of a new control frame or a conventional ACK frame. The confirm signal may be transmitted after the non-AP STA(s) transmits/receives a signal. An IFS between the confirm signal (e.g., the signal of step S2340) and the signal of the non-AP STA(s) (e.g., the signal of step S2320) may be set to SIFS.

Using the above-described confirm signal/ACK, it is possible to clearly indicate whether a signal/PPDU/frame (e.g., a signal in step S2320) has been normally received from a non-AP STA(s). This allows the AP to guarantee that the detect/discovery procedure for the non-AP STA is being successfully performed.

The following technical features may correspond to steps S2350 and S2360 of FIG. 23.

Upon receiving an ack or confirming signal (e.g., the signal of step S2340) related to signal transmission and reception between a relay STA and a non-AP STA, the AP may transmit a report request frame (e.g., the signal of step S2350) to the relay STA to request feedback on the measured results. Upon receiving this, the relay STA reports information (e.g., the signal of step S2360) related to the detected/measured non-AP STA(s) to the AP. The technical features applied to the signal reported by the relay STA (e.g., the signal of step S2360) may include all or part of the technical features reported by the relay STA in FIG. 17.

The technical features of Fig. 23 can be modified in various ways. For example, the procedure of Fig. 23 can be modified as in Fig. 24.

Fig. 24 is a diagram illustrating an example of the search/discovery performed in this specification. Unlike Fig. 23, the example of Fig.24 omits the ack/confirming signal. That is, step S2340 of Fig.23 may be omitted in the procedure of Fig.24.

Additionally, step S2410 may be identical to step S2310, step S2420 may be identical to step S2320, step S2430 may be identical to step S2330, step S2450 may be identical to step S2350, and step S2460 may be identical to step S2360.

The technical features of Figures. 23/24 can be modified in various ways. For example, steps S2350/S2450 can be omitted. That is, the results of the search/measurement by the relay STA can be transmitted to the AP after a SIFS after the signal reception from the non-AP STA (i.e., the signal reception in step S2420) is completed. That is, step S2460 can be performed immediately after steps S2420/S2430 are performed and a time interval corresponding to the SIFS has elapsed.

The above-described technical features can be explained based on the following flowchart.

FIG. 25 is an example of a flowchart of this specification.

Each step of FIG. 25 may be performed by various STAs (AP-STA, Relay STA, non-AP STA) of the WLAN system. For example, each step of FIG. 25 is preferably performed by an AP STA.

The illustrated step S2510 is a step of transmitting a detection request frame. The detection request frame includes control information for a non-AP STA detection procedure performed by the relay STA.

The above step S2510 may be identical to step S1710 of FIG. 17. That is, it is preferable that the information included in the detection request frame of step S2510 includes at least one of the plurality of pieces of information described in step S1710.

Additionally or alternatively, step S2510 may be identical to step S2310 of FIG. 23 (or step S2410 of FIG. 24). That is, it is preferable that the information included in the detection request frame of step S2510 includes at least one of the plurality of pieces of information described in steps S2310/S2410.

Before step S2510 is performed, various management frames proposed in this specification may be exchanged. For example, before step S2510 is performed, a management frame including information defined by FIG. 16 may be exchanged. For example, before step S2510 is performed, it is preferable that the capability element(s) or capabilities element(s) described above be exchanged. For example, before step S2510 is performed, a management frame including at least one of the Information_1 (i.e., information regarding Detection/discovery for relay operation support), the Information_2 (i.e., Period of detection/discovery), and the Information_3 (i.e., max number of STAs) may be exchanged.

After step S2510 is performed, step S2520 may be performed. Step S2520 may include a procedure for receiving report information regarding the non-AP STA detection procedure performed by the relay STA.

Step S2520 may be identical to step S1760 of FIG. 17. Specifically, the information included in the report of step S2520 preferably includes at least one of the multiple pieces of information described in step S1760.

Additionally or alternatively, step S2520 may be identical to step S2360 of FIG. 23 (or step S2460 of FIG. 24). That is, it is preferable that the information included in the report of step S2520 includes at least one of the plurality of pieces of information described in steps S2360/S2460.

Additional steps may be performed between steps S2520 and S2510. For example, a response/ACK corresponding to step S2510 may be transmitted to the AP STA. Step S1720 may be performed between steps S2520 and S2510. Furthermore, steps S1730, S1740, and S1750 may be performed instead of steps S2520 and S2510, and additional steps may be performed before or after the above steps of S1730, S1740, and S1750.

FIG. 26 is an example of a procedure flowchart of the present specification.

Each step in FIG. 26 can be performed by various STAs (AP-STA, Relay STA, non-AP STA) in the WLAN system. For example, each step in FIG. 26 is preferably performed by a Relay STA.

The illustrated step S2610 is a step of receiving a detection request frame. The detection request frame includes control information for a non-AP STA detection procedure performed by the relay STA.

The above step S2610 may be identical to step S1710 of FIG. 17. That is, it is preferable that the information included in the detection request frame of step S2610 includes at least one of the plurality of pieces of information described in step S1710.

Additionally or alternatively, step S2610 may be identical to step S2310 of FIG. 23 (or step S2410 of FIG. 24). That is, it is preferable that the information included in the detection request frame of step S2610 includes at least one of the plurality of pieces of information described in steps S2310/S2410.

Before step S2610 is performed, various management frames proposed in the present specification may be exchanged. For example, before step S2610 is performed, a management frame including information defined by FIG. 16 may be exchanged. For example, before step S2610 is performed, it is preferable that the capability element(s) or capabilities element(s) described above be exchanged. For example, before step S2610 is performed, a management frame including at least one of the Information_1 (i.e., information regarding Detection/discovery for relay operation support), the Information_2 (i.e., Period of detection/discovery), and the Information_3 (i.e., max number of STAs) may be exchanged.

After step S2610 is performed, step S2620 may be performed. By step S2620, a procedure for receiving report information of the non-AP STA detection procedure performed by the relay STA may be performed.

The above step S2620 may be identical to step S1760 of FIG. 17. That is, it is preferable that the information included in the report of step S2620 includes at least one of the plurality of pieces of information described in step S1760.

Additionally or alternatively, step S2620 may be identical to step S2360 of FIG. 23 (or step S2460 of FIG. 24). That is, it is preferable that the information included in the report of step S2620 includes at least one of the plurality of pieces of information described in steps S2360/S2460.

Various additional steps may be performed between steps S2620 and S2610. For example, a response/ACK corresponding to step S2610 may be transmitted to the AP STA. Step S1720 may be performed between steps S2620 and S2610. Additionally, at least one of steps S1730, S1740, and S1750 may be additionally performed between steps S2620 and S2610.

The technical features of the present specification (e.g., the technical features described in Figures 17/23/24/25/26, etc.) may be implemented by various devices. The devices of the present specification may be the devices described in FIG. 1/FIG. 14. The devices of the present specification may include at least one processor; and at least one computer memory operably connectable to the at least one processor, the computer memory storing instructions for performing operations based on execution by the at least one processor.

For example, the processor may be the processor described in FIG. 1 and/or FIG. 14. Specifically, as described above, the processor of the present disclosure may include at least one of a digital signal processor (DSP), a central processing unit (CPU), a graphics processing unit (GPU), and a modem (modulator and demodulator). The processor may include computers with various architectures, such as single/multiprocessor architectures, sequential (Von Neumann)/parallel architectures, as well as specialized circuits such as FPGAs, application-specific integrated circuits (ASICs), signal processing devices, and other devices. For example, the processor described herein may be a SNAPDRAGON^{®} series processor manufactured by Qualcomm^{®}, an EXYNOS^{®} series processor manufactured by Samsung^{®}, an A series processor manufactured by Apple^{®}, a HELIO^{®} series processor manufactured by MediaTek^{®}, an ATOM^{®} series processor manufactured by INTEL^{®}, or an enhanced processor thereof.

For example, the instructions may refer to computer program instructions executed by the at least one processor. The (computer program) instructions provide logic and/or routines that enable the technical features of the present specification (e.g., the technical features described in Figures. 17/23/24/25/26, etc.) to be performed by the processor. The at least one processor can load and execute a computer program by reading the at least one memory.

The computer program(s) defined by the instructions may arrive at the device (e.g., a STA) described herein via a suitable delivery mechanism. The transmission mechanism may be, for example, a computer-readable storage medium, a computer program product, a memory device, a recording medium such as a CD-ROM or DVD, or a product tangibly embodying a computer program. The transmission mechanism may be a signal configured to reliably transmit a computer program via a wireless or electrical connection.

The (computer program) instructions may include software or firmware for a programmable processor (e.g., programmable content of a hardware device, whether instructions for a processor, or configuration settings for a fixed-function device, gate array, or programmable logic device, etc.).

For example, the memory may be the memory described in FIG. 1 and/or FIG. 14. That is, as described above, the memory of the present specification may store control information related to the operation of the STA of the present specification or information regarding signals transmitted and received by the STA (e.g., PPDUs including management/control/data frames).

The technical features of the present specification may also be implemented in at least one computer-readable medium (CRM). The CRM includes instructions that are executed by at least one processor as described above. The instructions stored in the CRM may be computer program instructions as described above.

The device of the present disclosure may further include a transceiver. The transceiver may be operably connected to the memory/processor, etc. The transceiver may be the transceiver illustrated in FIG. 1 and/or FIG. 14.

The technical features of the disclosure described above are applicable to a variety of applications or business models. For example, the technical features described above may be applied for wireless communication in devices that support artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

## Claims

1. A method performed in a Wireless Local Area Network (WLAN) system, the method comprising:
transmitting, by an access point (AP) station (STA) to a relay STA, a detection request frame, wherein the detection request frame includes control information for a non-AP STA detection procedure performed by the relay STA, and the non-AP STA detection procedure is performed based on a Physical Protocol Data Unit (PPDU) transmitted from at least one non-AP STA to the AP STA; and
receiving, by the AP STA from the relay STA, report information of the non-AP STA detection procedure performed by the relay STA, wherein the report information includes information related to at least one non-AP STA obtained from the relay STA.

2. The method of claim 1, wherein the AP STA transmits a management frame including at least one of information related to a radio resource used for a relay operation performed by the relay STA, information related to a direction of the relay operation, and information related to a number of non-AP STAs related to the relay operation.

3. The method of claim 1, wherein the AP STA receives a management frame from the relay STA and the at least one non-AP STA, wherein the management frame includes capability information related to whether a corresponding STA supports relay operation.

4. The method of claim 1, wherein the AP STA transmits a management frame including at least one of information related to a period during which the non-AP STA detection procedure is performed and information related to a number of non-AP STAs related to the non-AP STA detection procedure.

5. The method of claim 1, wherein the detection request frame includes resource unit (RU) allocation information, encoding information, and Modulation and Coding Scheme (MCS) information related to the PPDU transmitted from the at least one non-AP STA to the AP STA, and the detection request frame further includes identification (ID) information of the at least one non-AP STA.

6. The method of claim 5, wherein the detection request frame is a trigger frame.

7. The method of claim 1, wherein the report information includes link quality information for at least one non-AP STA obtained from the relay STA,
wherein the link quality information is at least one of Received Signal Strength Indicator (RSSI) information, Signal to Noise Ratio (SNR) information, and Signal to Interference plus Noise Ratio (SINR) information related to a corresponding non-AP STA.

8. The method of claim 1, wherein a response frame is received from the relay STA in response to the detection request frame, or a Trigger Based (TB) PPDU is received from at least one non-AP STA.

9. The method of claim 1, wherein the PPDU transmitted from the at least one non-AP STA to the AP STA is configured based on a Null Data Packet (NDP).

10. An access point (AP) station (STA) configured to operate in a Wireless Local Area Network (WLAN), comprising:
at least one processor; and
at least one computer memory operatively connected to the at least one processor and storing instructions that, based on being executed by the at least one processor, perform operations comprising:
transmitting, to a relay STA, a detection request frame, wherein the detection request frame includes control information for a non-AP STA detection procedure performed by the relay STA, and the non-AP STA detection procedure is performed based on a Physical Protocol Data Unit (PPDU) transmitted from at least one non-AP STA to the AP STA; and
receiving, from the relay STA, report information of the non-AP STA detection procedure performed by the relay STA, wherein the report information includes information related to at least one non-AP STA obtained from the relay STA.

11. A method performed in a Wireless Local Area Network (WLAN) system, the method comprising:
receiving, by a relay station (STA) from an access point (AP) STA, a detection request frame, wherein the detection request frame includes control information for a non-AP STA detection procedure performed by the relay STA, and the non-AP STA detection procedure is performed based on a Physical Protocol Data Unit (PPDU) transmitted from at least one non-AP STA to the AP STA; and
transmitting, by the relay STA to the AP STA, report information of the non-AP STA detection procedure performed by the relay STA, wherein the report information includes information related to at least one non-AP STA obtained from the relay STA.

12. A relay station (STA) configured to operate in a Wireless Local Area Network (WLAN), comprising:
at least one processor; and
at least one computer memory operatively connected to the at least one processor and storing instructions that, based on being executed by the at least one processor, perform operations comprising:
receiving, from an access point (AP) STA, a detection request frame, wherein the detection request frame includes control information for a non-AP STA detection procedure performed by the relay STA, and the non-AP STA detection procedure is performed based on a Physical Protocol Data Unit (PPDU) transmitted from at least one non-AP STA to the AP STA; and
transmitting, to the AP STA, report information of the non-AP STA detection procedure performed by the relay STA, wherein the report information includes information related to at least one non-AP STA obtained from the relay STA.

13. At least one computer readable medium (CRM) storing instructions that, based on being executed by at least one processor in a Wireless Local Area Network (WLAN) system, perform operations comprising:
transmitting, by an access point (AP) station (STA) to a relay STA, a detection request frame, wherein the detection request frame includes control information for a non-AP STA detection procedure performed by the relay STA, and the non-AP STA detection procedure is performed based on a Physical Protocol Data Unit (PPDU) transmitted from at least one non-AP STA to the AP STA; and
receiving, by the AP STA from the relay STA, report information of the non-AP STA detection procedure performed by the relay STA, wherein the report information includes information related to at least one non-AP STA obtained from the relay STA.

14. An apparatus in a Wireless Local Area Network (WLAN), comprising:
at least one transceiver; and
at least one processor; and
at least one computer memory operatively connected to the transceiver and the at least one processor and storing instructions that, based on being executed by the at least one processor, perform operations comprising:
transmitting, to a relay STA, a detection request frame, wherein the detection request frame includes control information for a non-AP STA detection procedure performed by the relay STA, and the non-AP STA detection procedure is performed based on a Physical Protocol Data Unit (PPDU) transmitted from at least one non-AP STA to the AP STA; and
receiving, from the relay STA, report information of the non-AP STA detection procedure performed by the relay STA, wherein the report information includes information related to at least one non-AP STA obtained from the relay STA.
